# FASCICULE DE BREVET EUROPEEN

(11) **EP 1 065 397 B1**
(45) Date de publication et mention de la délivrance du brevet: **12.04.2006**
(21) Numéro de dépôt: 00401678.8
(22) Date de dépôt: 14.06.2000
(51) Int. Cl.: F16D 3/06, B62D 1/18, F16C 3/035

(54) **Dispositif d'accouplement à billes de deux arbes coulissants**
Teleskopische Kugelkupplung für zwei Wellen
Telescopic ball coupling for two shafts

(30) Priorité: 30.06.1999 FR 9908673; 16.12.1999 FR 9915929; 08.06.2000 FR 0007326
(43) Date de publication de la demande: 03.01.2001
(73) Titulaire: NACAM France S.A., F-41100 Vendôme (FR)
(72) Inventeur: Onteniente, Manuel Antonio, 41100 Saint Ouen-Vendome (FR); Duval, Benoît, 41100 Vendome (FR); Laisement, André, 41290 La Chapelle Encherie (FR); Thomas, Robin, 41100 Aze (FR)
(74) Mandataire: Chassagnon, Jean-Alain

(56) Documents cités:
- WO-A-96/20862
- DE-A- 3 124 927
- DE-A- 3 730 393
- DE-C- 849 049
- FR-A- 1 228 149

## Description

L'invention se rapporte à un dispositif d'accouplement en rotation de deux arbres coulissants suivant leur axe commun. Le dispositif d'accouplement de l'invention s'applique notamment à une colonne de direction de véhicule automobile, en l'adoptant à la partie intermédiaire de colonne reliée au boîtier de direction, ou à la partie haute de colonne reliée au volant de direction.

Dans le cas plus particulier de l'axe intermédiaire, celui-ci a un cardan à chaque extrémité : un cardan est relié à l'entrée de mouvement du boîtier de direction, et l'autre cardan est relié au haut de colonne. Pour avoir une direction correcte des véhicules automobiles actuels, il est nécessaire que la longueur de l'axe intermédiaire soit variable et s'adapte aux oscillations du train avant du véhicule, qui sont dues au profil et à l'état de surface du revêtement de la route.

L'axe intermédiaire doit donc avoir tout d'abord une longueur variable, c'est-à-dire qu'il doit présenter une fonction coulissement de deux arbres l'un par rapport à l'autre suivant leur axe commun, qui est l'axe de la partie intermédiaire. De plus, il faut une fonction transmission du mouvement de rotation entre les deux arbres, et du couple de rotation nécessaire à la manoeuvre de la direction.

Il existe de nombreux dispositifs d'accouplement d'arbre coulissants, qui permettent d'associer le passage du couple de rotation entre les deux arbres par l'utilisation de cannelures, qui sont aménagées sur chacun des deux arbres avec des profils conjugués. Cependant ce type de dispositif présente un jeu franc après un cycle d'endurance de 150000 km, qui est celui demandé sur les voitures actuelles. Afin de retarder l'apparition de ce jeu franc, l'ajustement du coulissement des deux arbres lors de la fabrication est relativement serré, ce qui demande lors du montage en chaîne, un effort axial relativement important, d'où un temps de montage plus important et plus de pénabilité dans la réalisation de ce montage.

Cet ajustement doit être précis pour permettre l'absorption correcte des mouvements axiaux en fonctionnement. Hors lors du passage de couple de rotation, l'effort axial est fonction du couple à transmettre, il y a alors un phénomène de blocage axial des deux arbres, puis un déblocage axial brutal, d'où l'apparition d'à-coups préjudiciables au maintien d'un bon ajustement du coulissement avec un jeu réduit ; et néfaste à une bonne impression de conduite.

Un dispositif d'accouplement selon le preambule de la revendication 1 est décrit dans DE-A-3730393.

Le but de la présente invention est de proposer un dispositif d'accouplement d'arbres coulissants qui évite les inconvénients précédents, c'est-à-dire un dispositif qui demande un effort axial qui ne soit pas lié au couple à transmettre. Il faut donc que l'effort axial augmente très peu lorsque le couple de rotation à transmettre augmente. De plus, il faut qu'il n'y ait pas d'apparition de jeu franc après le cycle d'endurance, et que le dispositif d'accouplement des deux arbres puisse se monter facilement dans les encombrements possibles existants sur les véhicules automobiles, et ceci avec un effort axial réduit de mise en place.

L'invention se rapporte à un dispositif d'accouplement de deux arbres : un arbre intérieur et un arbre extérieur qui coulissent l'un dans l'autre suivant la direction de leur axe commun. Ledit dispositif d'accouplement des deux arbres comporte des éléments roulants, qui sont disposés entre l'arbre intérieur et l'arbre extérieur.

Dans le dispositif d'accouplement, chacun desdits éléments roulant est disposé d'une part dans une partie concave de l'arbre intérieur, et d'autre part dans une partie concave de l'arbre extérieur. Chacun desdits éléments roulant est muni d'au moins un élément élastique, qui est disposé entre ledit élément roulant et la partie concave correspondante de l'un des deux arbres.

Les dits éléments roulants sont aménagés en plusieurs rangées axiales. Chaque rangée axiale d'éléments roulants est disposée d'une part dans une partie concave en forme de rainure axiale de l'arbre intérieur, et d'autre part dans une partie concave en forme de rainure axiale de l'arbre extérieur. L'une de ces deux parties concaves en forme de rainure axiale a une section, qui comporte un fond et deux flancs afin de recevoir deux chemins de roulement en forme de barre axiale. Chaque chemin de roulement est disposé entre les éléments roulants correspondants, et l'un des flancs de ladite rainure axiale. Au moins un élément élastique est disposé entre le fond de ladite rainure axiale et chacun des deux chemins de roulements, afin de pousser lesdits chemins de roulement contre les éléments roulants correspondants.

Le montage de chacun des éléments roulants est réalisé de manière qu'au repos, lorsqu'il n'y a pas de transmission de couple, chaque élément roulant soit toujours en contact du côté de l'/les éléments élastiques, et du côté opposé ; et de manière que lorsqu'il y a transmission de couple, il y ait pour chaque élément roulant, une zone d'appui du côté de l'/les éléments élastiques, et une zone d'appui du côté opposé.

Préférablement selon l'invention, les éléments roulants sont des billes.

Dans un type de montage de l'invention, chacune des billes se déplace sur deux chemins de roulement qui sont poussés contre ladite bille par le même élément élastique correspondant. Les chemins de roulement sont disposés entre ladite bille et l'élément élastique correspondant.

Dans un autre type de montage de l'invention, chacune des billes se déplace sur deux chemins de roulement avec deux éléments élastiques. Chacun des chemins de roulement est poussé contre ladite bille par l'élément élastique correspondant. Chacun desdits chemins de roulement est disposé entre ladite bille et l'élément élastique correspondant.

Afin d'éviter tout frottement des billes les unes contre les autres, les billes sont disposées dans au moins une cage de maintien.

Afin d'augmenter la sécurité de fonctionnement du dispositif d'accouplement de l'invention, des rainures mâles et des rainures femelles, ayant des profils conjugués avec un certain jeu, sont aménagés sur l'arbre intérieur et sur l'arbre extérieur, de façon qu'en cas de rupture des billes, le couple puisse être encore transmis entre l'arbre intérieur et l'arbre extérieur.

Plusieurs structures du dispositif d'accouplement peuvent être élaborées. Dans une structure, le ou les éléments élastiques est/sont disposés dans l'arbre intérieur. Dans une autre structure, le ou les éléments élastiques est/sont disposés dans l'arbre extérieur.

Dans une autre structure, les éléments élastiques sont disposés pour certains dans l'arbre intérieur, et pour les autres dans l'arbre extérieur.

Dans un agencement particulier de l'invention, le dispositif d'accouplement a les billes qui sont disposées en plusieurs rangées axiales ; les billes étant maintenues en place les unes par rapport aux autres par une cage.

Pour chaque rangée de billes, il est aménagé dans l'arbre extérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre intérieur une partie concave en forme de rainure axiale, dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre intérieur. Chaque chemin de roulement est en forme de barre axiale. La section de chaque chemin de roulement a :
- une face concave qui vient en contact avec les billes,
- deux faces contiguës l'une par rapport à l'autre, et qui sont disposées respectivement en face du fond et d'un des flancs de la rainure axiale, et
- une face inclinée par rapport au fond de la rainure axiale.

Pour chaque rangée de billes, un élément élastique, en forme de boudin axial élastique dont la section est circulaire, est disposé dans la rainure axiale entre les deux chemins de roulement. Ledit boudin axial élastique vient prendre appui sur le fond de la rainure axiale, afin de pousser la face inclinée de chacun des deux chemins de roulement.

Dans un autre agencement particulier de l'invention, le dispositif d'accouplement a les billes qui sont disposées en plusieurs rangées axiales, les billes étant maintenues en place les unes par rapport aux autres par une cage.

Pour chaque rangée de billes, il est aménagé dans l'arbre intérieur une partie concave en forme de rainure axiale, dont la section comporte deux faces concaves inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre extérieur. Chaque chemin de roulement est en forme de barre axiale. La section de chaque chemin de roulement a :
- une face concave qui vient en contact avec les billes,
- deux faces contiguës l'une par rapport à l'autre, et qui sont disposées respectivement en face du fond et d'un des flancs de la rainure axiale,
- une face inclinée par rapport au fond de la rainure axiale.

Pour chaque rangée de billes, un élément élastique, en forme de boudin axial élastique dont la section est circulaire, est disposé dans la rainure axiale entre les deux chemins de roulement. Ledit boudin axial élastique vient prendre appui sur le fond de la rainure axiale, afin de pousser la face inclinée de chacun des deux chemins de roulement.

Dans un autre agencement particulier de l'invention, le dispositif d'accouplement a les billes qui sont disposées en plusieurs rangées axiales, les billes étant maintenues en place les unes par rapport aux autres par une cage.

Pour chaque rangée de billes, il est aménagé dans l'arbre extérieur une partie concave en forme de rainure axiale dont la section comporte deux faces concaves inclinées l'une par rapport à l'autre, qui viennent en contact avec les billes.

Pour chaque rangée de billes, il est aménagé dans l'arbre intérieur une partie concave en forme de rainure axiale dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre intérieur. Chaque chemin de roulement est en forme de barre axiale. La section de chaque chemin de roulement a :
- une face concave qui vient en contact avec les billes,
- deux faces contiguës l'une par rapport à l'autre, et qui sont disposées respectivement en face du fond et d'un des flancs de la rainure axiale,
- un bourrelet qui est aménagé sur la face du côté du fond à l'angle de l'autre face.

Pour chaque rangée de billes, il y a un élément élastique en forme de boudin axial élastique, dont la section a une embase axiale et deux protubérances axiales. Ledit boudin axial élastique est disposé dans la rainure axiale entre les bourrelets des deux chemins de roulement. L'embase axiale vient prendre appui sur le fond de la rainure axiale, afin que chacune des deux protubérances axiales pousse le chemin de roulement correspondant.

Dans un autre agencement particulier de l'invention, le dispositif d'accouplement a les billes qui sont disposées en plusieurs rangées axiales, les billes étant maintenues en place les unes par rapport aux autres par une cage.

Pour chaque rangée de billes, il est aménagé dans l'arbre intérieur une partie concave en forme de rainure axiale dont la section comporte deux faces courbes inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre extérieur, chaque chemin de roulement est en forme de barre axiale.

La section de chaque chemin de roulement a :
- une face concave qui vient en contact avec les billes,
- deux faces contiguës l'une par rapport à l'autre, et qui sont disposées respectivement en face du fond et d'un des flancs de la rainure axiale,
- un bourrelet qui est aménagé sur la face du côté du fond à l'angle de l'autre face.

Pour chaque rangée de billes, il y a un élément élastique en forme de boudin axial élastique, dont la section a une embase axiale et deux protubérances axiales. Ledit boudin axial élastique est disposé dans la rainure axiale entre les bourrelets des deux chemins de roulement. L'embase axiale vient prendre appui sur le fond de la rainure axiale, afin que chacune des deux protubérances axiales pousse le chemin de roulement correspondant.

Dans un autre agencement particulier de l'invention, le dispositif d'accouplement a les billes qui sont disposées en plusieurs rangées axiales, les billes de chaque rangée axiale étant maintenues en place les unes par rapport aux autres par une cage.

Pour chaque rangée de billes, il est aménagé dans l'arbre extérieur une partie concave en forme de rainure axiale dont la section comporte deux faces courbes inclinées l'une par rapport à l'autre, qui viennent en contact avec les billes.

Pour chaque rangée de billes, il est aménagé dans l'arbre intérieur une partie concave en forme de rainure axiale dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre intérieur. Chaque chemin de roulement est en forme de barre axiale, dont la section a une forme courbe afin de venir en contact avec les billes.

Pour chaque rangée de billes, deux éléments élastiques, en forme de boudin axial élastique, sont disposés dans la rainure axiale. Chaque élément élastique vient prendre appui sur le fond et sur l'un des flancs de la rainure axiale afin de pousser sur le chemin de roulement correspondant.

Dans un autre agencement particulier de l'invention, le dispositif d'accouplement a les billes qui sont disposées en plusieurs rangées axiales, les billes de chaque rangée axiale étant maintenues en place les unes par rapport aux autres par une cage.

Pour chaque rangée de billes, il est aménagé dans l'arbre intérieur une partie concave en forme de rainure axiale dont la section comporte deux faces courbes inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre extérieur. Chaque chemin de roulement est en forme de barre axiale, dont la section a une forme courbe afin de venir en contact avec les billes.

Pour chaque rangée de billes, deux éléments élastiques en forme de boudin axial élastique sont disposés dans la rainure axiale. Chaque élément élastique vient prendre appui sur le fond et sur l'un des flancs de la rainure axiale, afin de pousser sur le chemin de roulement correspondant.

Dans un autre agencement particulier de l'invention, le dispositif d'accouplement a les billes qui sont disposées en plusieurs rangées axiales, les billes étant maintenues en place les unes par rapport aux autres par une cage.

Pour chaque rangée de billes, il est aménagé dans l'arbre extérieur une partie concave en forme de rainure axiale dont la section comporte deux faces courbes inclinées l'une par rapport à l'autre, qui viennent en contact avec les billes.

Pour chaque rangée de billes, il est aménagé dans l'arbre intérieur une partie concave en forme de rainure axiale dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre intérieur, chaque chemin de roulement est en forme de barre axiale. La section de chaque chemin de roulement a:
- une face qui vient en contact avec les billes,
- deux faces contiguës l'une par rapport à l'autre, et qui sont disposées respectivement en face du fond et d'un des flancs de la rainure axiale,
- une face contiguë à la face et sensiblement perpendiculaire à ladite face, les deux faces étant sensiblement parallèles au plan diamétral passant par le milieu du fond ; l'espace entre les deux faces représentant un jeu suffisant au repos et en cas de transmission de couple.

Pour chaque rangée de billes, deux éléments élastiques, en forme d'élément axial élastique, sont disposés chacun dans une rainure axiale aménagée dans le chemin de roulement correspondant. Chaque élément élastique vient prendre appui sur le fond de la rainure axiale, afin de pousser sur le chemin de roulement correspondant.

Dans un autre agencement particulier de l'invention, le dispositif d'accouplement a les billes qui sont disposées en plusieurs rangées axiales, les billes étant maintenues en place les unes par rapport aux autres par une cage.

Pour chaque rangée de billes, il est aménagé dans l'arbre intérieur une partie concave en forme de rainure axiale dont la section comporte deux faces courbes inclinées l'une par rapport à l'autre, qui viennent en contact avec les billes.

Pour chaque rangée de billes, il est aménagé dans l'arbre extérieur une partie concave en forme de rainure axiale dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre extérieur, chaque chemin de roulement est en forme de barre axiale. La section de chaque chemin de roulement a :
- une face qui vient en contact avec les billes,
- deux faces contiguës l'une par rapport à l'autre, et qui sont disposées respectivement en face du fond et d'un des flancs de la rainure axiale,
- une face contiguë à la face et sensiblement perpendiculaire à ladite face, les deux faces étant sensiblement parallèles au plan diamétral passant par le milieu du fond ; l'espace entre les deux faces représentant un jeu suffisant au repos et en cas de transmission de couple.

Pour chaque rangée de billes, deux éléments élastiques en forme d'élément axial élastique sont disposés chacun dans une rainure axiale aménagée dans le chemin de roulement correspondant. Chaque élément élastique vient prendre appui sur le fond, afin de pousser sur le chemin de roulement correspondant.

Dans un autre agencement particulier de l'invention, le dispositif d'accouplement a les billes qui sont disposées en plusieurs rangées axiales, les billes étant maintenues en place les unes par rapport aux autres par une cage.

Pour chaque rangée de billes, il est aménagé dans l'arbre extérieur une partie concave en forme de rainure axiale dont la section comporte deux faces concaves inclinées l'une par rapport à l'autre, qui viennent en contact avec les billes.

Pour chaque rangée de billes, il est aménagé dans l'arbre intérieur une partie concave en forme de rainure axiale, dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre intérieur. Chaque chemin de roulement est en forme de barre axiale. La section de chaque chemin de roulement a :
. une face concave qui vient en contact avec les billes,
. deux faces contiguës l'une par rapport à l'autre, et qui sont disposées respectivement en face du fond et d'un des flancs de la rainure axiale, et
. un bourrelet qui est aménagé sur la face du côté du fond à l'angle de l'autre face.

Pour chaque rangée de billes, il y a un élément élastique, qui comprend des ressorts hélicoïdaux. Lesdits ressorts hélicoïdaux sont disposés dans la rainure axiale entre les bourrelets des deux chemins de roulement. L'embase desdits ressorts hélicoïdaux vient prendre appui sur le fond de la rainure axiale, afin que lesdits ressorts hélicoïdaux poussent les deux chemins de roulement.

Dans un autre agencement particulier de l'invention, le dispositif d'accouplement a les billes qui sont disposées en plusieurs rangées axiales, les billes étant maintenues en place les unes par rapport aux autres par une cage.

Pour chaque rangée de billes, il est aménagé dans l'arbre extérieur une partie concave en forme de rainure axiale dont la section comporte deux faces concaves inclinées l'une par rapport à l'autre, qui viennent en contact avec les billes.

Pour chaque rangée de billes, il est aménagé dans l'arbre intérieur une partie concave en forme de rainure axiale, dont la section comporte un fond et deux flancs, le fond étant sensiblement perpendiculaire au plan diamétral passant par son milieu.

Pour chaque rangée de billes, deux chemins de roulement sont disposés dans la partie concave en forme de rainure axiale de l'arbre intérieur. Chaque chemin de roulement est en forme de barre axiale. La section de chaque chemin de roulement a :
. une face concave qui vient en contact avec les billes,
. deux faces contiguës l'une par rapport à l'autre, et qui sont disposées respectivement en face du fond et d'un des flancs de la rainure axiale, et
. un bourrelet qui est aménagé sur la face du côté du fond à l'angle de l'autre face.

Pour chaque rangée de billes, il y a un élément élastique, en forme de lame axiale ondulée élastique. Ladite lame axiale ondulée élastique est disposée dans la rainure axiale entre les bourrelets des deux chemins de roulement. La lame axiale ondulée élastique vient prendre appui sur le fond de la rainure axiale, afin que ladite lame axiale ondulée élastique pousse les deux chemins de roulement.

Dans ce dernier agencement particulier, chaque lame axiale ondulée élastique a une extrémité axiale qui est recourbée dans le sens externe et une extrémité axiale qui est recourbée dans le sens interne. L'extrémité axiale externe retient l'extrémité axiale concernée des deux chemins de roulement correspondants. L'extrémité axiale interne s'appuie contre l'extrémité de l'arbre intérieur à l'aide d'une rondelle butée qui est solidarisée avec l'extrémité de l'arbre intérieur, afin de retenir l'autre extrémité axiale des deux chemins de roulement.

Dans une variante de ce dernier agencement particulier, chaque lame axiale ondulée élastique a ses deux extrémités axiales qui sont recourbées dans le même sens externe. L'une des extrémités axiales externes s'appuie contre un jonc monté dans une gorge aménagée dans l'arbre intérieur, afin de retenir l'extrémité axiale concernée des deux chemins de roulement correspondants.

L'autre extrémité axiale externe s'appuie contre une rondelle butée, qui est solidarisée avec l'extrémité de l'arbre intérieur, afin de retenir l'autre extrémité axiale des deux chemins de roulement.

Dans un montage particulièrement bien équilibré du dispositif d'accouplement, les billes sont disposées en trois rangées axiales. Les rangées axiales sont transversalement à 120° les unes des autres. L'arbre intérieur est muni de trois rainures axiales, les rainures axiales étant transversalement à 120° les unes des autres. L'arbre extérieur est muni de trois rainures axiales, les rainures axiales étant transversalement à 120° les unes des autres.

Dans un autre montage particulièrement bien équilibré du dispositif d'accouplement, les billes sont disposées en deux rangées axiales diamétralement opposées. L'arbre intérieur est muni de deux rainures axiales diamétralement opposées. L'arbre extérieur est muni de deux rainures axiales diamétralement opposées.

Dans une architecture complète du dispositif d'accouplement selon l'invention, l'arbre intérieur est muni de trois rainures axiales, les rainures axiales étant transversalement à 120° les unes des autres. Dans chaque rainure axiale sont montés un élément élastique en forme de boudin axial élastique et deux chemins de roulement en forme de barre axiale.

Les billes sont disposées en trois rangées axiales, les rangées axiales étant transversalement à 120° les unes des autres, les billes étant maintenues en place les unes par rapport aux autres par une cage en forme de manchon.

L'ensemble du manchon à billes avec les chemins de roulement et les boudins axiaux élastiques est fermé à chaque extrémité axiale par une bague de maintien. Chaque bague de maintien vient s'engager dans chacune des rainures axiales de l'arbre intérieur, l'une des bagues de maintien s'appuyant contre un jonc qui est monté dans une gorge dudit arbre intérieur.

L'arbre extérieur est muni de trois rainures axiales transversalement à 120° les unes des autres, qui viennent coulisser sur les rangées de billes. Les rainures axiales ont la longueur voulue pour permettre le coulissement axial demandé de l'arbre extérieur et de l'arbre intérieur.

Le dispositif d'accouplement selon l'invention s'applique très bien soit à la partie intermédiaire d'une colonne de direction de véhicule automobile, soit à la partie haute d'une colonne de direction de véhicule automobile.

Le dispositif d'accouplement de deux arbres suivant leur axe commun selon l'invention présente ainsi l'avantage d'avoir toujours un appui par roulement de billes, qui sont toujours en contact même lorsqu'il n'y a pas de transmission de couple de rotation.

De plus, il y a un effort axial réduit qui est nécessaire lors du montage en chaîne. L'ajustement précis du dispositif d'accouplement de l'invention permet d'éviter les à-coups axiaux lors de la conduite du véhicule, et garantit la bonne tenue à l'endurance en évitant l'apparition de jeu franc dans l'accouplement. De plus, lors du passage du couple de rotation, l'effort axial n'est pas fonction de ce couple. Enfin, le dispositif d'accouplement peut se monter facilement dans l'encombrement existant des colonnes de direction de véhicule automobile.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue schématique en perspective d'une direction de véhicule automobile, dans laquelle le dispositif d'accouplement de l'invention s'applique à la partie intermédiaire de colonne ;
- la figure 2 est une coupe partielle schématique suivant II-II de la figure 1 ;
- la figure 3 est une vue axiale de la partie intermédiaire de la direction de véhicule automobile de la figure 1, dans laquelle est représenté en coupe axiale partielle un autre mode de réalisation de l'invention ;
- la figure 4 est une vue éclatée en perspective de l'ensemble du dispositif d'accouplement de la figure 3 ;
- la figure 5 est une coupe transversale suivant V-V de la figure 3 ;
- la figure 6 est une vue partielle agrandie de la figure 5 ;
- la figure 7 est une coupe transversale partielle analogue à la figure 6 d'un autre mode de réalisation de l'invention ;
- la figure 8 est une coupe transversale partielle analogue à la figure 6 d'un autre mode de réalisation de l'invention ;
- la figure 9 est une coupe transversale partielle analogue à la figure 6 d'un autre mode de réalisation de l'invention ;
- la figure 10 est une coupe transversale suivant le plan de la figure 5 d'un autre mode de réalisation de l'invention,
- la figure 11 est une coupe transversale suivant le plan de la figure 5 d'un autre mode de réalisation de l'invention,
- la figure 12 est une coupe transversale suivant le plan de la figure 5 d'un autre mode de réalisation de l'invention,
- la figure 13 est une coupe transversale suivant le plan de la figure 5 d'un autre mode de réalisation de l'invention ;
- la figure 14 est une coupe transversale partielle agrandie de la figure 13 ;
- la figure 15 est une coupe transversale partielle analogue à la figure 14 d'un autre mode de réalisation de l'invention ;
- la figure 16 représente un mode de réalisation d'un élément axial élastique suivant l'invention ;
- la figure 17 est une coupe transversale partielle correspondant à la figure 14 avec un autre mode de réalisation de l'élément axial élastique ;
- la figure 18 est une coupe transversale partielle correspondant à la figure 15 avec un autre mode de réalisation de l'élément axial élastique ;
- la figure 19 est une coupe transversale suivant le plan de la figure 5 d'un autre mode de réalisation de l'invention ;
- la figure 20 est une coupe transversale partielle analogue à la figure 19 d'un autre mode de réalisation de l'invention ;
- la figure 21 est une vue en perspective avec arrachement de l'ensemble du dispositif d'accouplement correspondant à la figure 20 ;
- la figure 22 est une coupe axiale correspondant à la figure 21 ; et
- la figure 23 est une coupe axiale analogue à la figure 22 d'un autre mode de réalisation de l'invention.

L'invention se rapporte à un dispositif d'accouplement en rotation de deux arbres qui coulissent l'un dans l'autre suivant leur axe commun.

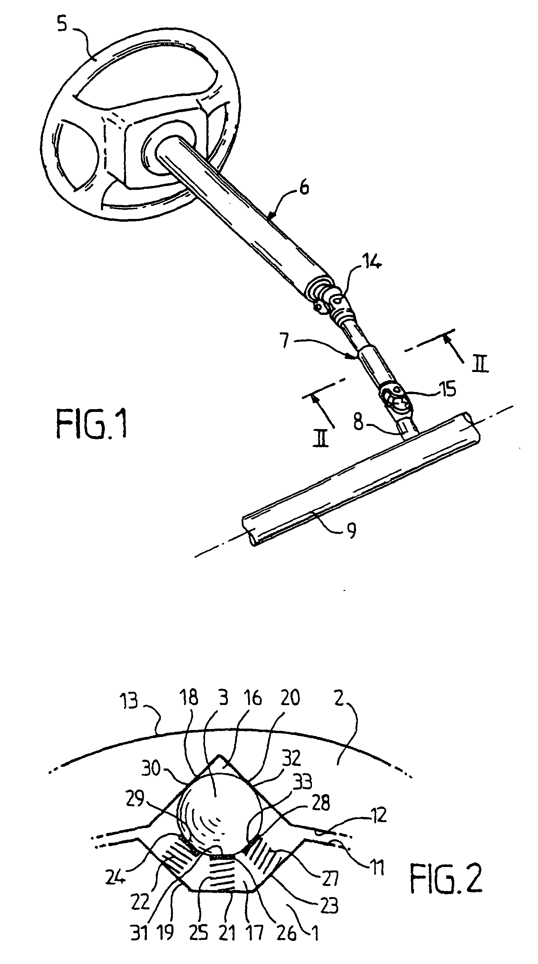

Ce dispositif d'accouplement s'applique particulièrement bien à une direction de véhicule automobile, comme celle qui est représentée schématiquement sur la figure 1.

La direction représentée comporte une colonne de direction avec une partie haute de colonne 6 appelée aussi haut de colonne, et une partie intermédiaire de colonne 7 appelée aussi axe intermédiaire.

La partie haute de colonne 6 est reliée par son extrémité supérieure au volant de direction 5, et par son extrémité inférieure à la partie intermédiaire de colonne 7.

La partie intermédiaire de colonne 7 est reliée par son extrémité supérieure à la partie haute de colonne 6, et par son extrémité inférieure au boîtier de direction 8 de la tige de direction 9.

La partie intermédiaire de colonne 7 est reliée à chacune de ses extrémités au moyen d'une articulation en joint de cardan référencée 14 pour la partie haute de colonne 6, et référencée 15 pour le boîtier de direction 8.

Dans ce qui suit, la description se rapporte à un dispositif d'accouplement qui est aménagé dans la partie intermédiaire de colonne 7. Le dispositif d'accouplement de l'invention peut également être aménagé dans la partie haute de colonne 6.

La figure 2 représente schématiquement en coupe transversale partielle la partie intermédiaire de colonne 6, avec le principe d'un dispositif d'accouplement en rotation de deux arbres selon l'état de la technique.

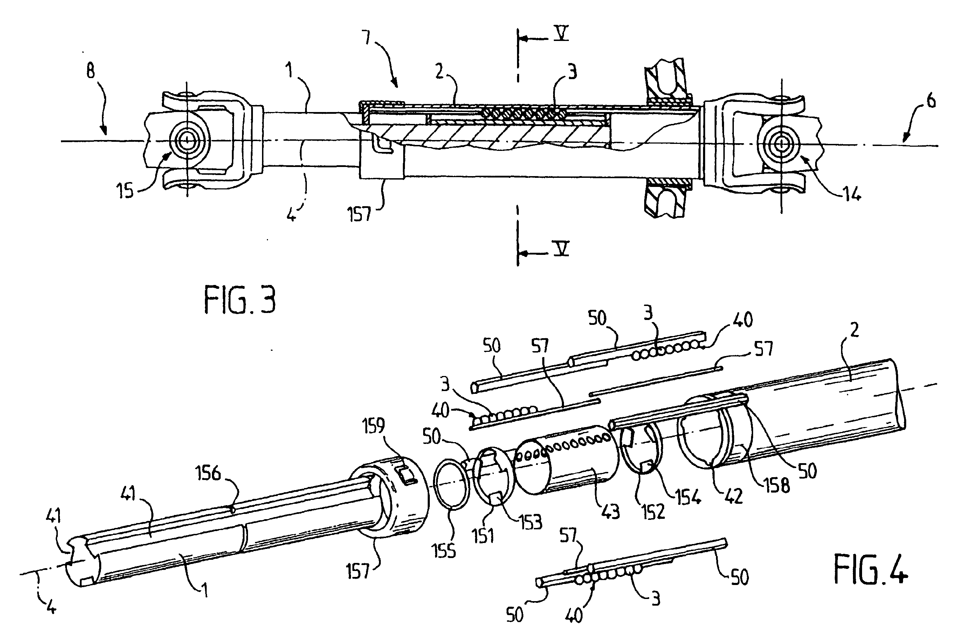

Un arbre intérieur 1 et un arbre extérieur 2 coulissent l'un dans l'autre suivant la direction de leur axe commun 4, qui est représenté sur les figures 3 et 4. Le dispositif d'accouplement des deux arbres comporte des éléments roulants, qui sont des billes 3 dans les différents modes de réalisation décrits ci-après. Les billes 3 sont disposées entre l'arbre intérieur 1 et l'arbre extérieur 2. Dans le dispositif d'accouplement de l'invention, chacun desdits éléments roulant ou bille 3 est disposé d'une part dans une partie concave de l'arbre intérieur 1, et d'autre part dans une partie concave de l'arbre extérieur 2.

Chacun desdits éléments roulant ou bille 3 est muni d'au moins un élément élastique qui est disposé entre ledit élément roulant ou bille 3 et la partie concave correspondante de l'arbre intérieur 1. L'élément élastique ou les éléments élastiques peuvent également. être disposés entre l'élément roulant ou la bille 3 et la partie concave correspondante de l'arbre extérieur 2.

Le dispositif d'accouplement est agencé de manière qu'au repos, lorsqu'il n'y a pas de transmission de couple, chaque élément roulant ou bille 3 soit toujours en contact du côté de l'/les éléments élastiques, et soit toujours en contact du côté opposé. Le dispositif d'accouplement est également agencé de manière que lorsqu'il y a transmission de couple, il y ait pour chaque élément roulant ou bille 3, une zone d'appui du côté de l'/les éléments élastiques, et une zone d'appui du côté opposé.

Dans le cas de la figure 2 de l'état de la technique, chaque bille 3 est disposée dans une partie concave 16 de l'arbre extérieur 2. Cette partie concave 16 est formée de deux faces courbes 18 et 20, qui sont inclinées l'une par rapport à l'autre, de manière qu'il y ait une zone de contact 30 entre la bille 3 et la face courbe 18 et une zone de contact 32 entre la bille 3 et la face courbe 20.

Chaque bille 3 est également disposée dans une partie concave 17 de l'arbre intérieur 1. Cette partie concave 17 est formée d'un fond 21, et de deux flancs 19 et 23 qui dans le cas de la figure 2 sont inclinés par rapport au fond 21.

Un élément élastique ou ressort 22 est disposé entre le flanc 19 et la bille 3, un autre élément élastique ou ressort 25 est disposé entre le fond 21 et la bille 3, et enfin un autre élément élastique ou ressort 27 est disposé entre le flanc 23 et la bille 3.

De plus, un patin d'appui 24 est intercalé entre le ressort 22 et la bille 3, afin d'avoir une zone de contact 29 entre la bille 3 et le patin d'appui 24. Un autre patin d'appui 26 est intercalé entre le ressort 25 et la bille 3, afin d'avoir une zone de contact 31 entre la bille 3 et le patin d'appui 26. Enfin un autre patin d'appui 28 est intercalé entre le ressort 27 et la bille 3, afin d'avoir une zone de contact 33 entre la bille 3 et le patin d'appui 28.

Ce principe de l'état de la technique est également décrit dans le document allemand DE 3730393 A au nom de LEMFÖRDER.

L'ensemble en vue axiale de la partie intermédiaire de colonne 7 est représentée sur la figure 3. L'arbre intérieur 1 et l'arbre extérieur 2 coulissent avec les billes 3 suivant leur axe commun 4. La partie intermédiaire de colonne 7 est reliée au boîtier de direction 8 par le joint de cardan 15, et elle est reliée à la partie haute de colonne 6 par le joint de cardan 14.

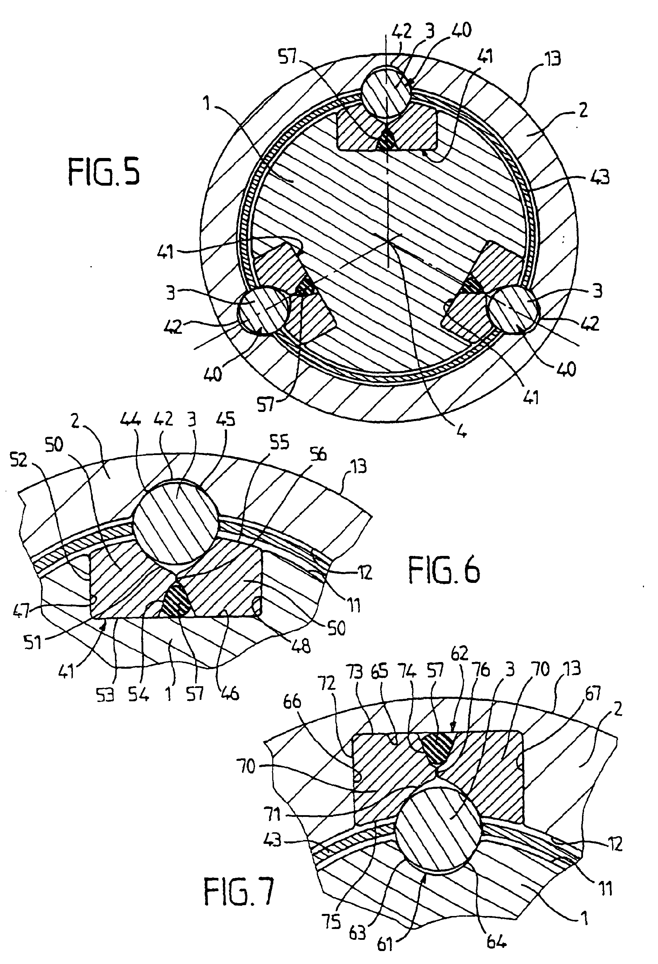

Le dispositif d'accouplement, représenté en vue éclatée sur la figure 4 et en coupe transversale sur les figures 5 et 6, comporte des billes 3 qui sont disposées en trois rangées axiales 40. Les rangées axiales 40 sont situées transversalement à 120° les unes des autres. L'arbre intérieur 1 est muni de trois rainures axiales 41, qui sont situées transversalement à 120° les unes des autres. L'arbre extérieur 2 est muni de trois rainures axiales 42, qui sont situées transversalement à 120° les unes des autres.

Les billes 3 sont maintenues en place les unes par rapport aux autres par une seule et même cage 43.

Pour chaque rangée 40 de billes 3, il est aménagé dans l'arbre extérieur 2 une partie concave en forme de rainure axiale 42, dont la section comporte deux faces concaves 44, 45 inclinées l'une par rapport à l'autre, qui viennent en contact avec les billes 3.

Pour chaque rangée 40 de billes 3, il est aménagé dans l'arbre intérieur 1 une partie concave en forme de rainure axiale 41, dont la section comporte un fond 46 et deux flancs 47 et 48. Le fond 46 est sensiblement perpendiculaire au plan diamétral passant par son milieu.

Pour chaque rangée 40 de billes 3, il y a deux chemins de roulement 50, qui sont disposés dans la partie concave en forme de rainure axiale 41 de l'arbre intérieur 1. Chaque chemin de roulement 50 est en forme de barre axiale. La section de chaque chemin de roulement 50 a :
- une face concave 51 qui vient en contact avec les billes 3,
- deux faces contiguës 53 et 52 l'une par rapport à l'autre, et qui sont disposées respectivement en face du fond 46 et d'un des flancs 47 et 48 de la rainure axiale 41,
- une face inclinée 54 par rapport au fond 46 de la rainure axiale 41.

Pour chaque rangée 40 de billes 3, un élément élastique, en forme de boudin axial élastique 57 dont la section est circulaire, est disposé dans la rainure axiale 41 entre les deux chemins de roulement 50. Ledit boudin axial élastique 57 vient prendre appui sur le fond 46 de la rainure axiale 41, afin de pousser la face inclinée 54 de chacun des deux chemins de roulement 50.

Dans le mode de réalisation représenté sur la figure 7, les billes 3 sont disposées en trois rangées axiales 40. Les rangées axiales 40 sont situées transversalement à 120° les unes des autres. Les billes 3 sont maintenues en place les unes par rapport aux autres par une seule et même cage 43.

Pour chaque rangée 40 de billes 3, il est aménagé dans l'arbre intérieur 1 une partie concave en forme de rainure axiale 61, dont la section comporte deux faces concaves 63, 64 inclinées l'une par rapport à l'autre, qui viennent en contact avec les billes 3.

Pour chaque rangée 40 de billes 3, il est aménagé dans l'arbre extérieur 2 une partie concave en forme de rainure axiale 62 dont la section comporte un fond 65 et deux flancs 66 et 67. Le fond 65 est sensiblement perpendiculaire au plan diamétral passant par son milieu.

Pour chaque rangée 40 de billes 3, il y a deux chemins de roulement 70, qui sont disposés dans la partie concave en forme de rainure axiale 62 de l'arbre extérieur 2. Chaque chemin de roulement 70 est en forme de barre axiale. La section de chaque chemin de roulement 70 a :
- une face concave 71 qui vient en contact avec les billes 3,
- deux faces contiguës 73 et 72 l'une par rapport à l'autre, et qui sont disposées respectivement en face du fond 65 et d'un des flancs 66 ou 67 de la rainure axiale 62,
- une face inclinée 74 par rapport au fond 65 de la rainure axiale 62.

Pour chaque rangée 40 de billes 3, un élément élastique, en forme de boudin axial élastique 57 dont la section est circulaire, est disposé dans la rainure axiale 62 entre les deux chemins de roulement 70. Ledit boudin axial élastique 57 vient prendre appui sur le fond 65 de la rainure axiale 62, afin de pousser la face inclinée 74 de chacun des deux chemins de roulement 70.

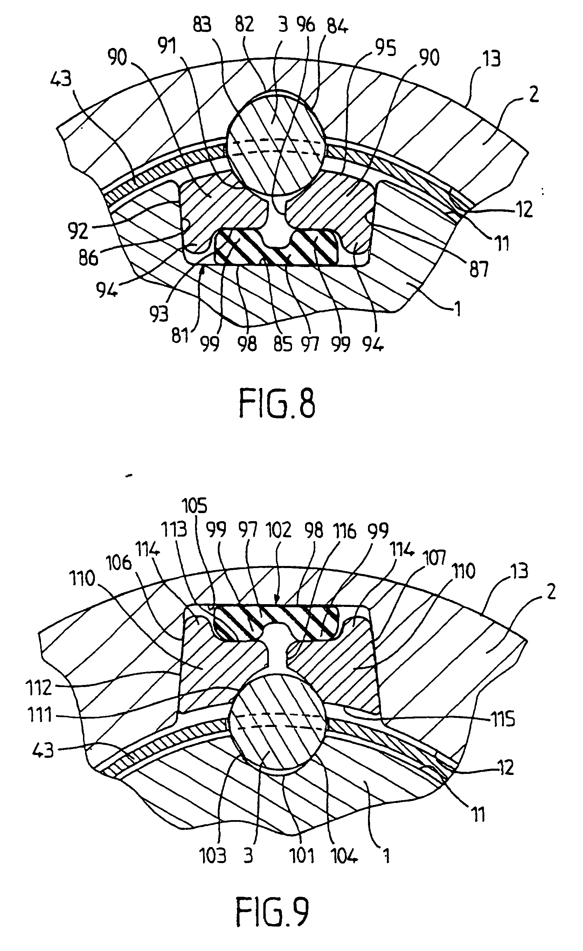

Dans le mode de réalisation représenté par la figure 8, les billes 3 sont disposées en plusieurs rangées axiales 40. Les billes 3 sont maintenues en place les unes par rapport aux autres par une seule et même cage 43.

Pour chaque rangée 40 de billes 3, il est aménagé dans l'arbre extérieur 2 une partie concave en forme de rainure axiale 82 dont la section comporte deux faces concaves 83, 84 inclinées l'une par rapport à l'autre, qui viennent en contact avec les billes 3.

Pour chaque rangée 40 de billes 3, il est aménagé dans l'arbre intérieur 1 une partie concave en forme de rainure axiale 81 dont la section comporte un fond 85 et deux flancs 86 et 87. Le fond 85 est sensiblement perpendiculaire au plan diamétral passant par son milieu.

Pour chaque rangée 40 de billes 3, il y a deux chemins de roulement 90, qui sont disposés dans la partie concave en forme de rainure axiale 81 de l'arbre intérieur 1. Chaque chemin de roulement 90 est en forme de barre axiale. La section de chaque chemin de roulement 90 a :
- une face concave 91 qui vient en contact avec les billes 3,
- deux faces contiguës 93 et 92 l'une par rapport à l'autre, et qui sont disposées respectivement en face du fond 85 et d'un des flancs 86 ou 87 de la rainure axiale 81.
- un bourrelet 94 est aménagé sur la face 93 à l'angle de la face 92.

Pour chaque rangée 40 de billes 3, il y a un élément élastique, en forme de boudin axial élastique 97 dont la section a une embase axiale 98 et deux protubérances axiales 99. Ledit boudin axial élastique 97 est disposé dans la rainure axiale 81 entre les bourrelets 94 des deux chemins de roulement 90. L'embase axiale 98 vient prendre appui sur le fond 85 de la rainure axiale 81; afin que chacune des deux protubérances axiales 99 pousse le chemin de roulement 90 correspondant.

Dans le mode de réalisation représenté sur la figure 9, les billes 3 sont disposées en plusieurs rangées axiales 40. Les billes sont maintenues en place les unes par rapport aux autres par une seule et même cage 43.

Pour chaque rangée 40 de billes 3, il est aménagé dans l'arbre intérieur 1 une partie concave en forme de rainure axiale 101 dont la section comporte deux faces courbes 103, 104 inclinées l'une par rapport à l'autre, qui viennent en contact avec les billes 3.

Pour chaque rangée 40 de billes 3, il est aménagé dans l'arbre extérieur 2 une partie concave en forme de rainure axiale 102 dont la section comporte un fond 105 et deux flancs 106 et 107. Le fond 105 est sensiblement perpendiculaire au plan diamétral passant par son milieu.

Pour chaque rangée 40 de billes 3, il y a deux chemins de roulement 110, qui sont disposés dans la partie concave en forme de rainure axiale 102 de l'arbre extérieur 2. Chaque chemin de roulement 110 est en forme de barre axiale. La section de chaque chemin de roulement 110 a :
- une face concave 111 qui vient en contact avec les billes 3,
- deux faces contiguës 113 et 112 l'une par rapport à l'autre, et qui sont disposées respectivement en face du fond 105 et d'un des flancs 106 ou 107 de la rainure axiale 101,
- un bourrelet 114 est aménagé sur la face 113 à l'angle de la face 112.

Pour chaque rangée 40 de billes 3, il y a un élément élastique, en forme de boudin axial élastique 97 dont la section a une embase axiale 98 et deux protubérances axiales 99. Ledit boudin axial élastique 97 est disposé dans la rainure axiale 102 entre les bourrelets 114 des deux chemins de roulement 110. L'embase axiale 98 vient prendre appui sur le fond 105 de la rainure axiale 102, afin que chacune des deux protubérances axiales 99 pousse le chemin de roulement 110 correspondant.

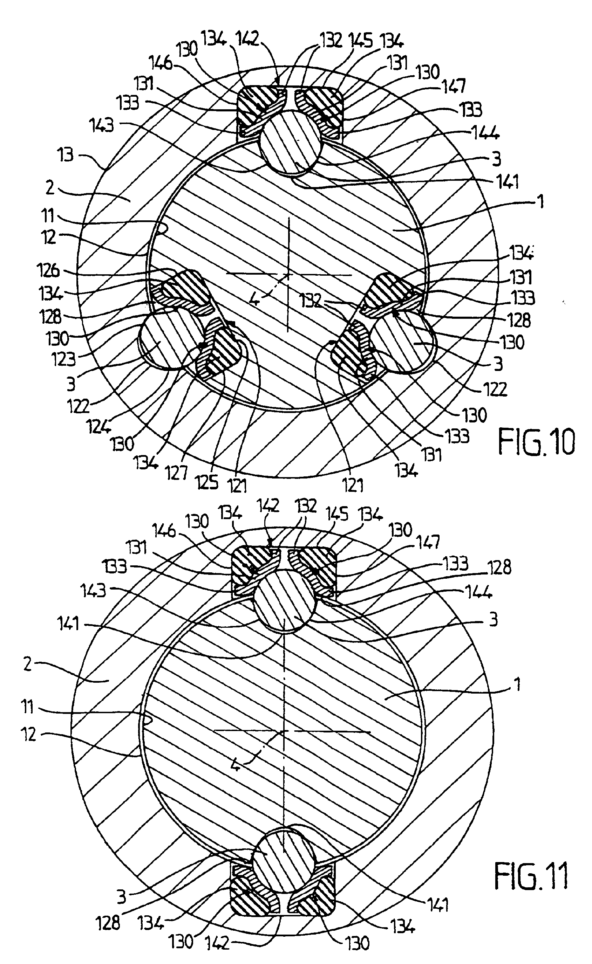

Dans le mode de réalisation représenté sur la figure 10, les billes 3 sont disposées en trois rangées axiales 40. Les rangées axiales 40 sont situées transversalement à 120° les unes des autres. Les billes 3 de chaque rangée axiale 40 sont maintenues en place les unes par rapport aux autres par une cage 128. Il y a donc trois cages 128.

Pour deux des trois rangées 40 de billes 3, il est aménagé dans l'arbre extérieur 2 une partie concave en forme de rainure axiale 122 dont la section comporte deux faces courbes 123 et 124 inclinées l'une par rapport à l'autre, qui viennent en contact avec les billes 3.

Pour chaque rangée 40 de billes 3, il est aménagé dans l'arbre intérieur 1 une partie concave en forme de rainure axiale 121 dont la section comporte un fond 125 et deux flancs 126 et 127. Le fond 125 est sensiblement perpendiculaire au plan diamétral passant par son milieu.

Pour chaque rangée 40 de billes 3, il y a deux chemins de roulement 130, qui sont disposés dans la partie concave en forme de rainure axiale 121 de l'arbre intérieur 1. Chaque chemin de roulement 130 est en forme de barre axiale, dont la section a une forme courbe 131 afin de venir en contact avec les billes 3. Chaque chemin de roulement 130 à deux extrémités rabattues 132 et 133.

Pour chaque rangée 40 de billes 3, deux éléments élastiques, en forme de boudin axial élastique 134, sont disposés dans la rainure axiale 121. Chaque élément élastique 134 vient prendre appui sur le fond 125 et sur l'un des flancs 126 ou 127 de la rainure axiale 121 afin de pousser sur le chemin de roulement 130 correspondant.

Dans le mode de réalisation de la figure 11, les billes 3 sont disposées en deux rangées axiales 40. Les rangées axiales 40 sont situées transversalement de façon diamétralement opposée. Les billes 3 de chaque rangée axiale 40 sont maintenues en place les unes par rapport aux autres par une cage 128. Il y a donc deux cages 128.

Dans la description ci-après, chaque rangée de billes 40 se rapporte à la troisième rangée de billes non décrite de la figure 10, ainsi qu'aux deux rangées de billes de la figure 11.

Pour chaque rangée 40 de billes 3, il est aménagé dans l'arbre intérieur 1 une partie concave en forme de rainure axiale 141 dont la section comporte deux faces courbes 143, 144 inclinées l'une par rapport à l'autre, qui viennent en contact avec les billes 3.

Pour chaque rangée 40 de billes 3, il est aménagé dans l'arbre extérieur 2 une partie concave en forme de rainure axiale 142 dont la section comporte un fond 145 et deux flancs 146 et 147. Le fond 145 est sensiblement perpendiculaire au plan diamétral passant par son milieu.

Pour chaque rangée 40 de billes 3, il y a deux chemins de roulement 130, qui sont disposés dans la partie concave en forme de rainure axiale 142 de l'arbre extérieur 2. Chaque chemin de roulement 130 est en forme de barre axiale, dont la section a une forme courbe 131 afin de venir en contact avec les billes 3. Chaque chemin de roulement 130 a deux extrémités rabattues 132 et 133.

Pour chaque rangée 40 de billes 3, deux éléments élastiques en forme de boudin axial élastique 134 sont disposés dans la rainure axiale 142. Chaque élément élastique 134 vient prendre appui sur le fond 145 et sur l'un des flancs 146 ou 147 de la rainure axiale 142, afin de pousser sur le chemin de roulement 130 correspondant.

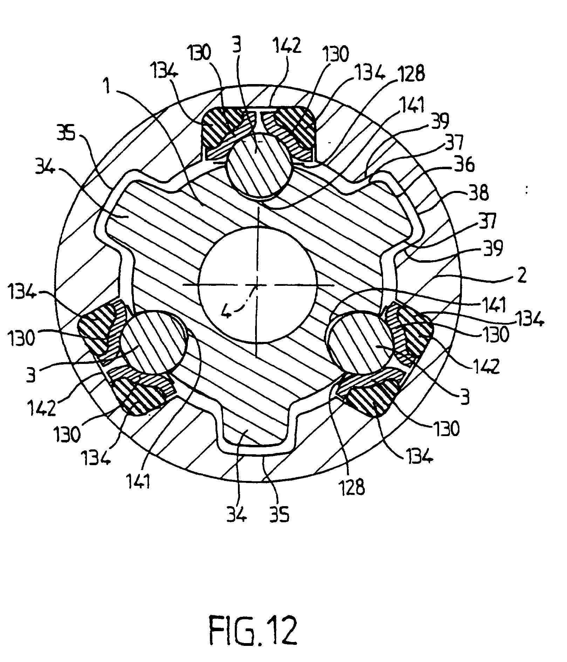

Comme on peut le voir sur la figure 12, des rainures mâles 34 et des rainures femelles 35, ayant des profils conjugués avec un certain jeu, sont aménagés sur l'arbre intérieur 1 et l'arbre extérieur 2. Ainsi, en cas de rupture des billes 3, le couple peut encore être transmis entre l'arbre intérieur 1 et l'arbre extérieur 2.

Selon l'invention, et quelque soit la réalisation des éléments élastiques, les éléments élastiques 57, 97 ou 131 sont disposés : soit dans l'arbre intérieur 1, soit dans l'arbre extérieur 2, ou soit pour certains dans l'arbre intérieur 1, et pour les autres dans l'arbre extérieur 2.

De plus, quel que soit la réalisation des éléments élastiques, les billes 3 peuvent être disposées en plusieurs rangées axiales 40, et notamment en deux rangées axiales 40 diamétralement opposées, ou en trois rangées axiales 40 disposées transversalement à 120° les unes des autres.

Dans le mode de réalisation représenté sur les figures 3 et 4, l'arbre intérieur 1 est muni de trois rainures axiales 41. Les rainures axiales 41 sont transversalement à 120° les unes des autres. Dans chaque rainure axiale 41 sont montés un élément élastique en forme de boudin axial élastique 57 et deux chemins de roulement 50 en forme de barre axiale.

Les billes 3 sont disposées en trois rangées axiales 40, les rangées axiales sont transversalement à 120° les unes des autres. Les billes sont maintenues en place les unes par rapport aux autres par une cage en forme de manchon 43.

L'ensemble du manchon 43 à billes 3 avec les chemins de roulement 50 et les boudins axiaux élastiques 57 est fermé à chaque extrémité axiale par une bague de maintien 151 et 152. Chaque bague de maintien 151 et 152 vient s'engager à l'aide de tenons 153 et 154 dans chacune des rainures axiales 41 de l'arbre intérieur 1. L'une des bagues de maintien 151 s'appuie contre un jonc 155, qui est monté dans une gorge 156 de l'arbre intérieur 1.

L'arbre extérieur 2 est muni de trois rainures axiales 42 transversalement à 120° les unes des autres. Les rainures axiales 42 viennent coulisser sur les rangées 40 de billes 3. Les rainures axiales 42 ont la longueur voulue pour permettre le coulissement axial demandé de l'arbre extérieur 2 et de l'arbre intérieur 1.

Le montage des figures 3 et 4 peut aussi notamment s'appliquer aux rainures axiales 81 et 82 avec les chemins de roulement 90 et les boudins axiaux élastiques 97.

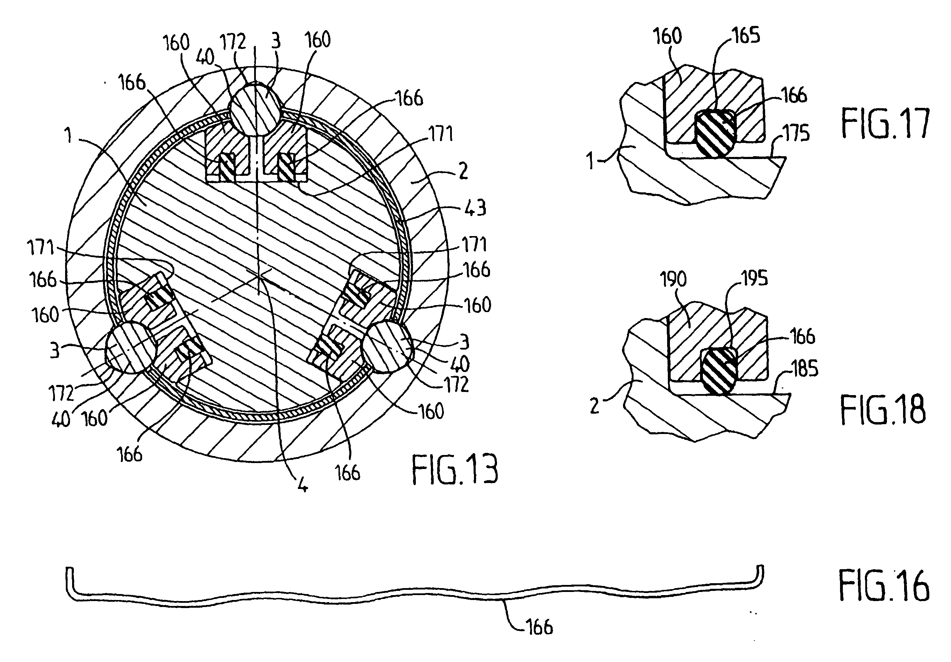

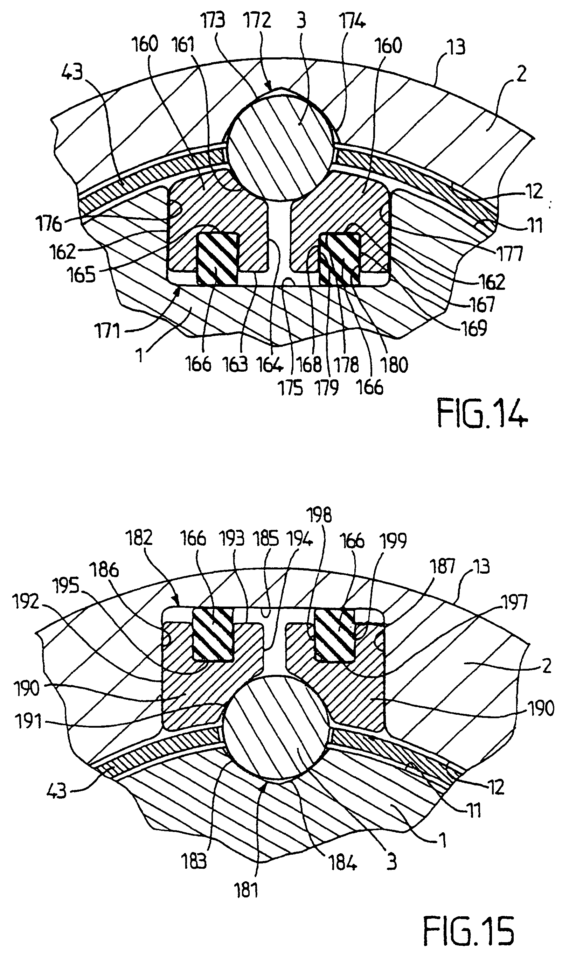

Les différentes réalisations avec des dispositions d'éléments élastiques sur l'arbre intérieur et/ou sur l'arbre extérieur s'appliquent également aux modes de l'invention représentés sur les figures 13, 14, 15, 16, 17 et 18.

Dans le mode de réalisation représenté sur les figures 13 et 14, les billes 3 sont disposées en trois rangées axiales 40. Les rangées axiales 40 sont situées transversalement à 120° les unes des autres. Les billes 3 de chaque rangée axiale 40 sont maintenues en place les unes par rapport aux autres par une seule et même cage 43.

Pour chaque rangée 40 de billes 3, il est aménagé dans l'arbre extérieur 2 une partie concave en forme de rainure axiale 172 dont la section comporte deux faces courbes 173 et 174 inclinées l'une par rapport à l'autre, qui viennent en contact avec les billes 3.

Pour chaque rangée 40 de billes 3, il est aménagé dans l'arbre intérieur 1 une partie concave en forme de rainure axiale 171 dont la section comporte un fond 175 et deux flancs 176 et 177. Le fond 175 est sensiblement perpendiculaire au plan diamétral passant par son milieu.

Pour chaque rangée 40 de billes 3, il y a deux chemins de roulement 160, qui sont disposés dans la partie concave en forme de rainure axiale 171 de l'arbre intérieur 1. Chaque chemin de roulement 160 est en forme de barre axiale.

La section de chaque chemin de roulement 160 a :
- une face 161 qui vient en contact avec les billes 3 ;
- deux faces contiguës 163 et 162 l'une par rapport à l'autre, et qui sont disposées respectivement en face du fond 175 et d'un des flancs 176 ou 177 de la rainure axiale 171 ;
- une face contiguë 164 à la face 163 disposée en face du fond 175 de la rainure axiale 171, et sensiblement perpendiculaire à ladite face 163 ; les deux faces 164 des chemins de roulement 160 étant sensiblement parallèles au plan diamétral passant par le milieu du fond 175 ; l'espace entre les deux faces 164 représentant un jeu suffisant au repos et en cas de transmission de couple.

Pour chaque rangée 40 de billes 3, deux éléments élastiques, en forme d'élément axial élastique 166, sont disposés chacun dans une rainure axiale 165 aménagée dans le chemin de roulement 160 correspondant. Chaque élément élastique 166 vient prendre appui sur le fond 175 de la rainure axiale 171 afin de pousser sur le chemin de roulement 160 correspondant.

Chaque élément axial élastique 166 a une section de forme carrée ou rectangulaire avec une base 178 et deux côtés 179 et 180, comme cela est représenté sur les figures 13, 14 et 15.

Chaque rainure axiale 165 a un fond 167 et deux côtés 168 et 169, qui sont dimensionnés pour recevoir l'élément élastique 166 correspondant.

Dans des variantes de réalisation représentées sur les figures 17 et 18, il peut être prévu un élément élastique 166 avec une section circulaire représentée sur la figure 17 ou ovale représentée sur la figure 18.

Dans un autre mode de réalisation de l'invention représenté sur la figure 16, l'élément axial élastique 166 est un ressort métallique ayant une forme adaptée à la rainure 165 ou 195 correspondante du chemin de roulement 160 ou 190, de façon à s'appliquer sur le fond 175 ou 185 et à pousser convenablement sur le chemin de roulement correspondant 160 ou 190. Le ressort métallique peut avoir un mode de réalisation tel que celui représenté sur la figure 16.

Dans le mode de réalisation de la figure 15, les billes 3 sont disposées en trois rangées axiales 40. Les rangées axiales 40 sont situées transversalement à 120° les unes des autres. Les billes 3 de chaque rangée axiale 40 sont maintenues en place les unes par rapport aux autres par une seule et même cage 43.

Pour chaque rangée 40 de billes 3, il est aménagé dans l'arbre intérieur 1 une partie concave en forme de rainure axiale 181 dont la section comporte deux faces courbes 183, 184 inclinées l'une par rapport à l'autre, qui viennent en contact avec les billes 3.

Pour chaque rangée 40 de billes 3, il est aménagé dans l'arbre extérieur 2 une partie concave en forme de rainure axiale 182 dont la section comporte un fond 185 et deux flancs 186 et 187. Le fond 185 est sensiblement perpendiculaire au plan diamétral passant par son milieu.

Pour chaque rangée 40 de billes 3, il y a deux chemins de roulement 190, qui sont disposés dans la partie concave en forme de rainure axiale 182 de l'arbre extérieur 2. Chaque chemin de roulement 190 est en forme de barre axiale.

La section de chaque chemin de roulement 190 a :
- une face 191 qui vient en contact avec les billes 3,
- deux faces contiguës 193 et 192 l'une par rapport à l'autre, et qui sont disposées respectivement en face du fond 185 et d'un des flancs 186 ou 187 de la rainure axiale 182 ;
- une face contiguë 194 à la face 193 disposée en face du fond 185 de la rainure axiale 182, et sensiblement perpendiculaire à ladite face 193, les deux faces 194 des chemins de roulement 190 étant sensiblement parallèles au plan diamétral passant par le milieu du fond 185 ; l'espace entre les deux faces 194 représentant un jeu suffisant au repos et en cas de transmission de couple.

Pour chaque rangée 40 de billes 3, deux éléments élastiques en forme d'élément axial élastique 166 sont disposés chacun dans une rainure axiale 195 aménagée dans le chemin de roulement 190 correspondant. Chaque élément élastique 166 vient prendre appui sur le fond 185 de la rainure axiale 182, afin de pousser sur le chemin de roulement 190 correspondant.

Chaque élément axial élastique 166 a une section de forme carrée ou rectangulaire avec une base 178 et deux côtés 179 et 180.

Chaque rainure axiale 195 a un fond 197 et deux côtés 198 et 199, qui sont dimensionnés pour recevoir l'élément élastique 166 correspondant.

Dans d'autres variantes de réalisation, il peut être prévu un élément élastique 166 avec une section circulaire ou ovale, ou un élément élastique 166 en forme de ressort métallique.

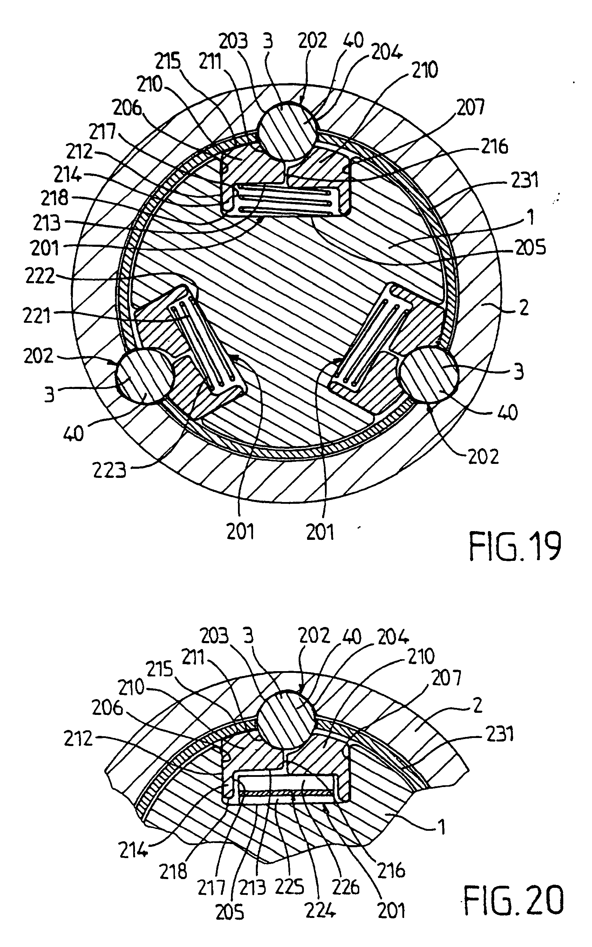

Dans le mode de réalisation représenté sur la figure 19, les billes 3 sont disposées en trois rangées axiales 40. Les rangées axiales 40 sont situées transversalement à 120° les unes des autres. Les billes 3 sont maintenues en place les unes par rapport aux autres par une seule et même cage 231 en forme de manchon. Pour chaque rangée 40 de billes 3, la cage 231 comporte un tenon axial interne 232 et un tenon axial externe 233.

Pour chaque rangée 40 de billes 3, il est aménagé dans l'arbre extérieur 2 une partie concave en forme de rainure axiale 202 dont la section comporte deux faces concaves 203, 204 inclinées l'une par rapport à l'autre, qui viennent en contact avec les billes.

Pour chaque rangée 40 de billes 3, il est aménagé dans l'arbre intérieur 1 une partie concave en forme de rainure axiale 201 dont la section comporte un fond 205 et deux flancs 206, 207. Le fond 205 est sensiblement perpendiculaire au plan diamétral passant par son milieu.

Pour chaque rangée 40 de billes 3, il y a deux chemins de roulement 210, qui sont disposés dans la partie concave en forme de rainure axiale 201 de l'arbre intérieur 1. Chaque chemin de roulement 210 est en forme de barre axiale. La section de chaque chemin de roulement a :
. une face concave 211 qui vient en contact avec les billes 3,
. deux faces contiguës 213 et 212 l'une par rapport à l'autre, et qui sont disposées respectivement en face du fond 205 et d'un des flancs 206, 207 de la rainure axiale 201,
. un bourrelet 214, qui est aménagé sur la face 213 à l'angle de la face 212, le bourrelet 214 a une extrémité 218 et une face interne 217,
. une face 216 sensiblement perpendiculaire au fond 205, et
. une face externe convexe 215.

Il existe un espace suffisant entre les deux faces 216 des deux chemins de roulements 210.

Pour chaque rangée 40 de billes 3, il y a un élément élastique, qui comprend des ressorts hélicoïdaux 221. Lesdits ressorts hélicoïdaux 221 sont disposés dans la rainure axiale 201 entre les bourrelets 214 des deux chemins de roulement 210. L'embase 222 desdits ressorts hélicoïdaux 221 vient prendre appui sur le fond 205 de la rainure axiale 201, afin que l'extrémité 223 desdits ressorts hélicoïdaux 221 poussent les deux chemins de roulement 210.

Dans le mode de réalisation représenté sur la figure 20, les billes 3 sont disposées en trois rangées axiales 40. Les rangées axiales 40 sont situées transversalement à 120° les unes des autres. Les billes 3 sont maintenues en place les unes par rapport aux autres par une seule et même cage 231 en forme de manchon.

Pour chaque rangée 40 de billes 3, la cage 231 comporte un tenon axial interne 232 et un tenon axial externe 233.

Pour chaque rangée 40 de billes 3, il est aménagé dans l'arbre extérieur 2 une partie concave en forme de rainure axiale 202 dont la section comporte deux faces concaves 203, 204 inclinées l'une par rapport à l'autre, qui viennent en contact avec les billes 3.

Pour chaque rangée 40 de billes 3, il est aménagé dans l'arbre intérieur 1 une partie concave en forme de rainure axiale 201 dont la section comporte un fond 205 et deux flancs 206, 207. Le fond 205 est sensiblement perpendiculaire au plan diamétral passant par son milieu.

Pour chaque rangée 40 de billes 3, il y a deux chemins de roulement 210, qui sont disposés dans la partie concave en forme de rainure axiale 201 de l'arbre intérieur 1. Chaque chemin de roulement 210 est en forme de barre axiale. La section de chaque chemin de roulement a :
. une face concave 211 qui vient en contact avec les billes,
. deux faces contiguës 213, 212 l'une par rapport à l'autre, et qui sont disposées respectivement en face du fond 205 et d'un des flancs 206, 207 de la rainure axiale 201,
. un bourrelet 214, qui est aménagé sur la face 213 à l'angle de la face 212, le bourrelet 214 a une extrémité 218 et une face interne 217,
. une face 216 sensiblement perpendiculaire au fond 205, et
. une face externe convexe 215.

Il existe un espace suffisant entre les deux faces 216 des deux chemins de roulements 210.

Pour chaque rangée 40 de billes 3, il y a un élément élastique, en forme de lame axiale ondulée élastique 224. Ladite lame axiale ondulée élastique 224 est disposée dans la rainure axiale 201 entre les bourrelets 214 des deux chemins de roulement 210. La lame axiale ondulée élastique 224 vient prendre appui sur le fond 205 de la rainure axiale 201, au moyen de ses ondulations internes 225 afin que ladite lame axiale ondulée élastique 224 pousse les deux chemins de roulement 210 au moyen de ses ondulations externes 226.

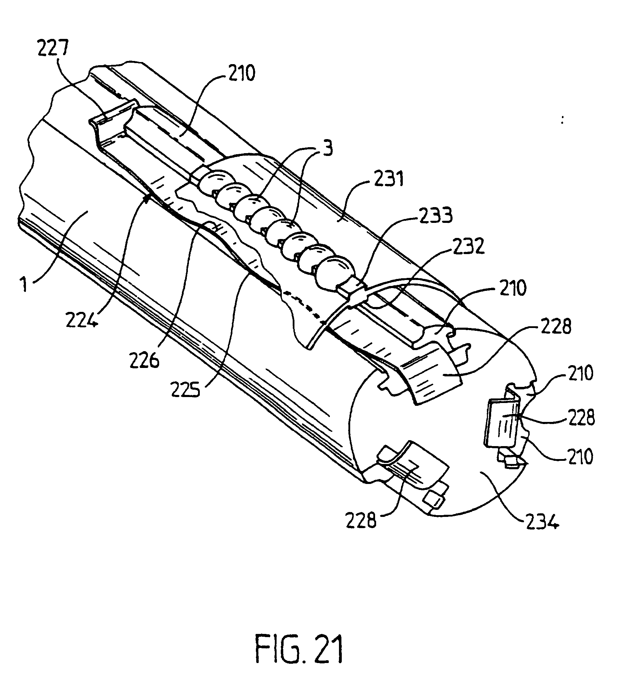

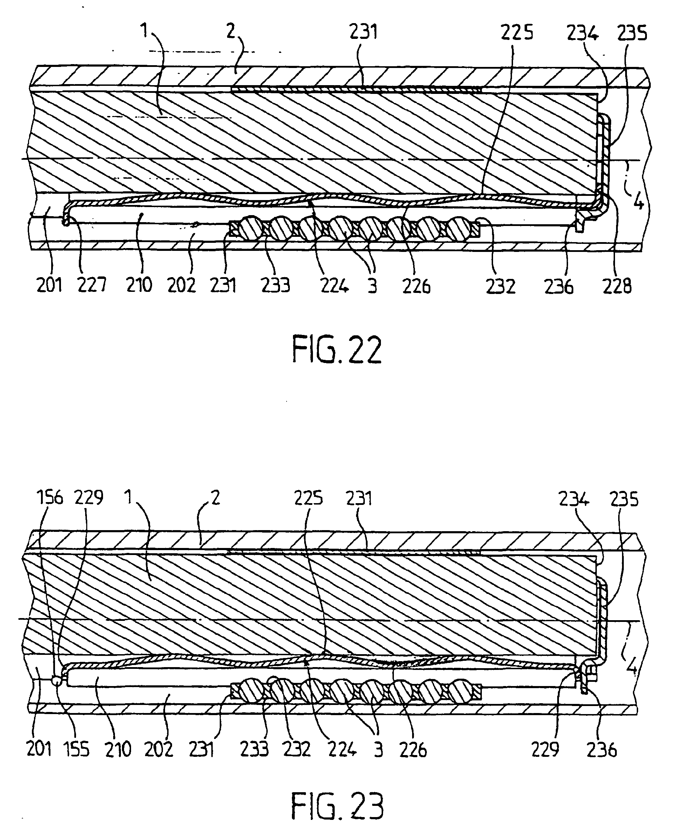

Dans le mode de réalisation représenté sur les figures 21 et 22, chaque lame axiale ondulée élastique 224 a une extrémité axiale 227 qui est recourbée dans le sens externe et une extrémité axiale 228 qui est recourbée dans le sens interne. On appelle sens externe ce qui s'écarte de l'axe 4, et sens interne ce qui se rapproche de l'axe 4. L'extrémité axiale externe 227 retient l'extrémité axiale concernée des deux chemins de roulement 210 correspondants. L'extrémité axiale interne 228 s'appuie contre l'extrémité 234 de l'arbre intérieur 1 à l'aide d'une rondelle butée 235, qui est solidarisée par sertissage de pattes 236 avec l'extrémité 234 de l'arbre intérieur 1, afin de retenir l'autre extrémité axiale des deux chemins de roulement 210.

Dans le mode de réalisation représenté sur la figure 23, chaque lame axiale ondulée élastique 224 a ses deux extrémités axiales 229 qui sont recourbées dans le même sens externe. L'une des extrémités axiales externes 229 s'appuie contre un jonc 155 monté dans une gorge 156 aménagée dans l'arbre intérieur 1, afin de retenir l'extrémité axiale concernée des deux chemins de roulement 210 correspondants.

L'autre extrémité axiale externe 229 s'appuie contre une rondelle butée 235, qui est solidarisée par sertissage de pattes 236 avec l'extrémité 234 de l'arbre intérieur 1, afin de retenir l'autre extrémité axiale des deux chemins de roulement 210.

## Revendications

1. Dispositif d'accouplement de deux arbres, un arbre intérieur (1) et un arbre extérieur (2) qui coulissent l'un dans l'autre suivant la direction de leur axe commun (4), ledit dispositif d'accouplement des deux arbres comporte des éléments roulants (3), qui sont disposés entre l'arbre intérieur (1) et l'arbre extérieur (2),
- chacun desdits éléments roulant (3) est disposé d'une part dans une partie concave (17) de l'arbre intérieur (1), et d'autre part dans une partie concave (16) de l'arbre extérieur (2) ;
- chacun desdits éléments roulant (3) est muni d'au moins un élément élastique qui est disposé entre ledit élément roulant (3) et la partie concave correspondante (17) de l'un des deux arbres (1, 2) ;
- lesdits éléments roulants (3) sont aménagés en plusieurs rangées axiales (40) ;
- chaque rangée axiale (40) d'éléments roulants (3) est disposée :
. d'une part dans une partie concave en forme de rainure axiale (41, 61, 81, 101, 121, 141, 171, 181, 201) de l'arbre intérieur (1), et
. d'autre part dans une partie concave en forme de rainure axiale (42, 62, 82, 102, 122, 142, 172, 182, 202) de l'arbre extérieur (2) ;
le dispositif d'accouplement est **caractérisé en ce que** :
- l'une de ces deux parties concaves en forme de rainure axiale a une section qui comporte un fond et deux flancs afin de recevoir :
. deux chemins de roulement (50, 70, 90, 110, 130, 160, 190, 210) en forme de barre axiale, qui sont disposés chacun entre les éléments roulants (3) correspondants, et l'un des flancs de ladite rainure axiale et,
.au moins un élément élastique (57, 97, 134, 166, 221, 224) disposé entre le fond de ladite rainure axiale et chacun des deux chemins de roulement, afin de pousser lesdits chemins de roulement contre les éléments roulants correspondants
- de manière qu'au repos, lorsqu'il n'y a pas de transmission de couple, chaque élément roulant (3) soit toujours en contact du côté de l'/les élément(s) élastique(s), et du côté opposé ;
- et de manière que lorsqu'il y a transmission de couple, il y ait pour chaque élément roulant (3), au moins une zone d'appui du côté de l'/les élément(s) élastique(s), et au moins une zone d'appui du côté opposé.

2. Dispositif d'accouplement selon la revendication 1, **caractérisé en ce que** les éléments roulants sont des billes (3).

3. Dispositif d'accouplement selon la revendication 2, **caractérisé en ce que** chacune des billes (3) se déplace sur deux chemins de roulement (50, 70, 90, 110) qui sont poussés contre ladite bille (3) par le même élément élastique (57, 97) correspondant ; lesdits chemins de roulement (50, 70, 90, 110) étant disposés entre ladite bille (3) et l'élément élastique (57, 97) correspondant.

4. Dispositif d'accouplement selon la revendication 2, **caractérisé en ce que** chacune des billes (3) se déplace sur deux chemins de roulement (130) avec deux éléments élastiques (134), chacun des chemins de roulement (130) est poussé contre ladite bille (3) par l'élément élastique (134) correspondant, chacun desdits chemins de roulement (130) est disposé entre ladite bille (3) et l'élément élastique (134) correspondant.

5. Dispositif d'accouplement selon l'une quelconque des revendications précédentes, **caractérisé en ce que** les billes (3) sont disposées dans au moins une cage de maintien (43, 128).

6. Dispositif d'accouplement selon l'une quelconque des revendications précédentes, **caractérisé en ce que** des rainures mâles (34) et femelles (35) avec des profils conjugués ayant un certain jeu, sont aménagés sur l'arbre intérieur (1) et l'arbre extérieur (2), de façon qu'en cas de rupture des billes (3), le couple puisse être encore transmis entre l'arbre intérieur (1) et l'arbre extérieur (2).

7. Dispositif d'accouplement selon l'une quelconque des revendications précédentes, **caractérisé en ce que** le ou les élément (s) élastique(s) (57, 97, 131) est/sont disposé(s) dans l'arbre intérieur (1).

8. Dispositif d'accouplement selon l'une quelconque des revendications 1 à 6, **caractérisé en ce que** le ou les éléments élastiques (57, 97, 134) est/sont disposé(s) dans l'arbre extérieur (2).

9. Dispositif d'accouplement selon l'une quelconque des revendications 1 à 6, **caractérisé en ce que** les éléments élastiques (57, 97, 134) sont disposés pour certains dans l'arbre intérieur (1), et pour les autres dans l'arbre extérieur (2).

10. Dispositif d'accouplement selon la revendication 3, **caractérisé en ce que** les billes (3) sont disposées en plusieurs rangées axiales (40) ; les billes (3) étant maintenues en place les unes par rapport aux autres par une cage (43) :
- pour chaque rangée (40) de billes (3), il est aménagé dans l'arbre extérieur (2) une partie concave en forme de rainure axiale (42), dont la section comporte deux faces concaves (44, 45) inclinées l'une par rapport à l'autre, qui viennent en contact avec les billes (3) ;
- pour chaque rangée (40) de billes (3), il est aménagé dans l'arbre intérieur (1) une partie concave en forme de rainure axiale (41), dont la section comporte un fond (46) et deux flancs (47, 48), le fond (46) étant sensiblement perpendiculaire au plan diamétral passant par son milieu ;
- pour chaque rangée (40) de billes (3), deux chemins de roulement (50) sont disposés dans la partie concave en forme de rainure axiale (41) de l'arbre intérieur (1), chaque chemin de roulement (50) est en forme de barre axiale, dont la section a
. une face concave (51) qui vient en contact avec les billes (3),
. deux faces contiguës (53, 52) l'une par rapport à l'autre, et qui sont disposées respectivement en face du fond (46) et d'un des flancs (47, 48) de la rainure axiale (41),
. une face inclinée (54) par rapport au fond (46) de la rainure axiale (41) ;
- pour chaque rangée (40) de billes (3), un élément élastique, en forme de boudin axial élastique (57) dont la section est circulaire est disposé dans la rainure axiale (41) entre les deux chemins de roulement (50), ledit boudin axial élastique (57) venant prendre appui sur le fond (46) de la rainure axiale (41), afin de pousser la face inclinée (54) de chacun des deux chemins de roulement (50).

11. Dispositif d'accouplement selon la revendication 3, **caractérisé en ce que** les billes (3) sont disposées en plusieurs rangées axiales (40), les billes (3) étant maintenues en place les unes par rapport aux autres par une cage (43) :
- pour chaque rangée (40) de billes (3), il est aménagé dans l'arbre intérieur (1) une partie concave en forme de rainure axiale (61), dont la section comporte deux faces concaves (63, 64) inclinées l'une par rapport à l'autre, qui viennent en contact avec les billes (3) ;
- pour chaque rangée (40) de billes (3), il est aménagé dans l'arbre extérieur (2) une partie concave en forme de rainure axiale (62) dont la section comporte un fond (65) et deux flancs (66, 67), le fond (65) étant sensiblement perpendiculaire au plan diamétral passant par son milieu ;
- pour chaque rangée (40) de billes (3), deux chemins de roulement (70) sont disposés dans la partie concave en forme de rainure axiale (62) de l'arbre extérieur (2), chaque chemin de roulement (70) est en forme de barre axiale, dont la section a :
. une face concave (71) qui vient en contact avec les billes (3),
. deux faces contiguës (73, 72) l'une par rapport à l'autre, et qui sont disposées respectivement en face du fond (65) et d'un des flancs (66, 67) de la rainure axiale (62),
. une face inclinée (74) par rapport au fond (65) de la rainure axiale (62) ;
- pour chaque rangée (40) de billes (3), un élément élastique, en forme de boudin axial élastique (57) dont la section est circulaire, est disposé dans la rainure axiale (62) entre les deux chemins de roulement (70), ledit boudin axial élastique (57) venant prendre appui sur le fond (65) de la rainure axiale (62), afin de pousser la face inclinée (74) de chacun des deux chemins de roulement (70).

12. Dispositif d'accouplement selon la revendication 3, **caractérisé en ce que** les billes (3) sont disposées en plusieurs rangées axiales (40), les billes (3) étant maintenues en place les unes par rapport aux autres par une cage (43) :
- pour chaque rangée (40) de billes (3), il est aménagé dans l'arbre extérieur (2) une partie concave en forme de rainure axiale (82) dont la section comporte deux faces concaves (83, 84) inclinées l'une par rapport à l'autre, qui viennent en contact avec les billes (3) ;
- pour chaque rangée (40) de billes (3), il est aménagé dans l'arbre intérieur (1) une partie concave en forme de rainure axiale (81) dont la section comporte un fond (85) et deux flancs (86, 87), le fond (85) étant sensiblement perpendiculaire au plan diamétral passant par son milieu ;
- pour chaque rangée (40) de billes (3), deux chemins de roulement (90) sont disposés dans la partie concave en forme de rainure axiale (81) de l'arbre intérieur (1), chaque chemin de roulement (90) est en forme de barre axiale, dont la section a :
une face concave (91) qui vient en contact avec les billes (3),
• deux faces contiguës (93, 92) l'une par rapport à l'autre, et qui sont disposées respectivement en face du fond (85) et d'un des flancs (86, 87) de la rainure axiale (81),
• un bourrelet (94) est aménagé sur la face (93) à l'angle de la face (92) ;
- pour chaque rangée (40) de billes (3), un élément élastique, en forme de boudin axial élastique (97) dont la section a une embase axiale (98) et deux protubérances axiales (99), ledit boudin axial élastique (97) est disposé dans la rainure axiale (81) entre les bourrelets (94) des deux chemins de roulement (90), l'embase axiale (98) venant prendre appui sur le fond (85) de la rainure axiale (81), afin que chacune des deux protubérances axiales (99) pousse le chemin de roulement (90) correspondant.

13. Dispositif d'accouplement selon la revendication 3, **caractérisé en ce que** les billes (3) sont disposées en plusieurs rangées axiales (40), les billes étant maintenues en place les unes par rapport aux autres par une cage (43) :
- pour chaque rangée (40) de billes (3), il est aménagé dans l'arbre intérieur (1) une partie concave en forme de rainure axiale (101) dont la section comporte deux faces courbes (103, 104) inclinées l'une par rapport à l'autre, qui viennent en contact avec les billes (3) ;
- pour chaque rangée (40) de billes (3), il est aménagé dans l'arbre extérieur (2) une partie concave en forme de rainure axiale (102) dont la section comporte un fond (105) et deux flancs (106, 107), le fond (105) étant sensiblement perpendiculaire au plan diamétral passant par son milieu ;
- pour chaque rangée (40) de billes (3), deux chemins de roulement (110) sont disposés dans la partie concave en forme de rainure axiale (102) de l'arbre extérieur (2), chaque chemin de roulement (110) est en forme de barre axiale, dont la section a :
. une face concave (111) qui vient en contact avec les billes (3),
. deux faces contiguës (113, 112) l'une par rapport à l'autre, et qui sont disposées respectivement en face du fond (105) et d'un des flancs (106, 107) de la rainure axiale (101),
. un bourrelet (114) est aménagé sur la face (113) à l'angle de la face (112) ;
- pour chaque rangée (40) de billes (3), un élément élastique, en forme de boudin axial élastique (97) dont la section a une embase axiale (98) et deux protubérances axiales (99), ledit boudin axial élastique (97) est disposé dans la rainure axiale (102) entre les bourrelets (114) des deux chemins de roulement (110), l'embase axiale (98) venant prendre appui sur le fond (105) de la rainure axiale (102), afin que chacune des deux protubérances axiales (99) pousse le chemin de roulement (110) correspondant.

14. Dispositif d'accouplement selon la revendication 4, **caractérisé en ce que** les billes (3) sont disposées en plusieurs rangées axiales (40), les billes (3) de chaque rangée axiale (40) étant maintenues en place les unes par rapport aux autres par une cage (128) ;
- pour chaque rangée (40) de billes (3), il est aménagé dans l'arbre extérieur (2) une partie concave en forme de rainure axiale (122) dont la section comporte deux faces courbes (123, 124) inclinées l'une par rapport à l'autre, qui viennent en contact avec les billes (3) ;
- pour chaque rangée (40) de billes (3), il est aménagé dans l'arbre intérieur (1) une partie concave en forme de rainure axiale (121) dont la section comporte un fond (125) et deux flancs (126, 127), le fond (125) étant sensiblement perpendiculaire au plan diamétral passant par son milieu ;
- pour chaque rangée (40) de billes (3), deux chemins de roulement (130) sont disposés dans la partie concave en forme de rainure axiale (121) de l'arbre intérieur (1), chaque chemin de roulement (130) est en forme de barre axiale, dont la section a une forme courbe afin de venir en contact avec les billes (3) ;
- pour chaque rangée (40) de billes (3), deux éléments élastiques, en forme de boudin axial élastique (134), sont disposés dans la rainure axiale (121), chaque élément élastique (134) venant prendre appui sur le fond (125) et sur l'un des flancs (126, 127) de la rainure axiale (121) afin de pousser sur le chemin de roulement (130) correspondant.

15. Dispositif d'accouplement selon la revendication 4, **caractérisé en ce que** les billes (3) sont disposées en plusieurs rangées axiales (40), les billes (3) de chaque rangée axiale (40) étant maintenues en place les unes par rapport aux autres par une cage (128) ;
- pour chaque rangée (40) de billes (3), il est aménagé dans l'arbre intérieur (1) une partie concave en forme de rainure axiale (141) dont la section comporte deux faces courbes (143, 144) inclinées l'une par rapport à l'autre, qui viennent en contact avec les billes (3) ;
- pour chaque rangée (40) de billes (3), il est aménagé dans l'arbre extérieur (2) une partie concave en forme de rainure axiale (142) dont la section comporte un fond (145) et deux flancs (146, 147), le fond (145) étant sensiblement perpendiculaire au plan diamétral passant par son milieu ;
- pour chaque rangée (40) de billes (3), deux chemins de roulement (130) sont disposés dans la partie concave en forme de rainure axiale (142) de l'arbre extérieur (2), chaque chemin de roulement (130) est en forme de barre axiale, dont la section a une forme courbe afin de venir en contact avec les billes (3),
- pour chaque rangée (40) de billes (3), deux éléments élastiques en forme de boudin axial élastique (134) sont disposés dans la rainure axiale (142), chaque élément élastique (134) venant prendre appui sur le fond (145) et sur l'un des flancs (146, 147) de la rainure axiale (142), afin de pousser sur le chemin de roulement (130) correspondant.

16. Dispositif d'accouplement selon la revendication 4, **caractérisé en ce que** les billes (3) sont disposées en plusieurs rangées axiales (40), les billes (3) étant maintenues en place les unes par rapport aux autres par une cage (43) ;
- pour chaque rangée (40) de billes (3), il est aménagé dans l'arbre extérieur (2) une partie concave en forme de rainure axiale (172) dont la section comporte deux faces courbes (173, 174) inclinées l'une par rapport à l'autre, qui viennent en contact avec les billes (3) ;
- pour chaque rangée (40) de billes (3), il est aménagé dans l'arbre intérieur (1) une partie concave en forme de rainure axiale (171) dont la section comporte un fond (175) et deux flancs (176, 177), le fond (175) étant sensiblement perpendiculaire au plan diamétral passant par son milieu ;
- pour chaque rangée (40) de billes (3), deux chemins de roulement (160) sont disposés dans la partie concave en forme de rainure axiale (171) de l'arbre intérieur (1), chaque chemin de roulement (160) est en forme de barre axiale, dont la section a :
. une face (161) qui vient en contact avec les billes (3),
. deux faces contiguës (163 et 162) l'une par rapport à l'autre, et qui sont disposées respectivement en face du fond (175) et d'un des flancs (176, 177) de la rainure axiale (171),
. une face contiguë (164) à la face (163) et sensiblement perpendiculaire à ladite face (163), les deux faces (164) étant sensiblement parallèles au plan diamétral passant par le milieu du fond (175) ; l'espace entre les deux faces (164) représentant un jeu suffisant au repos et en cas de transmission de couple ;
- pour chaque rangée (40) de billes (3), deux éléments élastiques, en forme d'élément axial élastique (166), sont disposés chacun dans une rainure axiale (165) aménagée dans le chemin de roulement correspondant (160), chaque élément élastique (166) venant prendre appui sur le fond (175) de la rainure axiale (171) afin de pousser sur le chemin de roulement (160) correspondant.

17. Dispositif d'accouplement selon la revendication 4, **caractérisé en ce que** les billes (3) sont disposées en plusieurs rangées axiales (40), les billes (3) étant maintenues en place les unes par rapport aux autres par une cage (43) ;
- pour chaque rangée (40) de billes (3), il est aménagé dans l'arbre intérieur (1) une partie concave en forme de rainure axiale (181) dont la section comporte deux faces courbes (183, 184) inclinées l'une par rapport à l'autre, qui viennent en contact avec les billes (3) ;
- pour chaque rangée (40) de billes (3), il est aménagé dans l'arbre extérieur (2) une partie concave en forme de rainure axiale (182) dont la section comporte un fond (185) et deux flancs (186, 187), le fond (185) étant sensiblement perpendiculaire au plan diamétral passant par son milieu ;
- pour chaque rangée (40) de billes (3), deux chemins de roulement (190) sont disposés dans la partie concave en forme de rainure axiale (182) de l'arbre extérieur (2), chaque chemin de roulement (190) est en forme de barre axiale, dont la section a :
. une face (191) qui vient en contact avec les billes (3),
. deux faces contiguës (193 et 192) l'une par rapport à l'autre, et qui sont disposées respectivement en face du fond (185) et d'un des flancs (186, 187) de la rainure axiale (182),
. une face contiguë (194) à la face (193) et sensiblement perpendiculaire à ladite face (193), les deux faces (194) étant sensiblement parallèles au plan diamétral passant par le milieu du fond (185) ; l'espace entre les deux faces (194) représentant un jeu suffisant au repos et en cas de transmission de couple ;
- pour chaque rangée (40) de billes (3), deux éléments élastiques en forme d'élément axial élastique (166) sont disposés chacun dans une rainure axiale (195) aménagée dans le chemin de roulement (190) correspondant, chaque élément élastique (166) venant prendre appui sur le fond (185), afin de pousser sur le chemin de roulement (190) correspondant.

18. Dispositif d'accouplement selon la revendication 3, **caractérisé en ce que** les billes (3) sont disposées en plusieurs rangées axiales (40), les billes (3) étant maintenues en place les unes par rapport aux autres par une cage (231) :
- pour chaque rangée (40) de billes (3), il est aménagé dans l'arbre extérieur (2) une partie concave en forme de rainure axiale (202) dont la section comporte deux faces concaves (203, 204) inclinées l'une par rapport à l'autre, qui viennent en contact avec les billes (3) ;
- pour chaque rangée (40) de billes (3), il est aménagé dans l'arbre intérieur (1) une partie concave en forme de rainure axiale (201) dont la section comporte un fond (205) et deux flancs (206, 207), le fond (205) étant sensiblement perpendiculaire au plan diamétral passant par son milieu ;
- pour chaque rangée (40) de billes (3), deux chemins de roulement (210) sont disposés dans la partie concave en forme de rainure axiale (201) de l'arbre intérieur (1), chaque chemin de roulement (210) est en forme de barre axiale, dont la section a :
. une face concave (211) qui vient en contact avec les billes (3),
. deux faces contiguës (213, 212) l'une par rapport à l'autre, et qui sont disposées respectivement en face du fond (205) et d'un des flancs (206, 207) de la rainure axiale (201),
. un bourrelet (214) est aménagé sur la face (213) à l'angle de la face (212) ;
- pour chaque rangée (40) de billes (3), un élément élastique, qui comprend des ressorts hélicoïdaux (221), lesdits ressorts hélicoïdaux sont disposés dans la rainure axiale (201) entre les bourrelets (214) des deux chemins de roulement (210), l'embase (222) desdits ressorts hélicoïdaux (221) venant prendre appui sur le fond (205) de la rainure axiale (201), afin que lesdits ressorts hélicoïdaux (221) poussent les deux chemins de roulement (210).

19. Dispositif d'accouplement selon la revendication 3, **caractérisé en ce que** les billes (3) sont disposées en plusieurs rangées axiales (40), les billes (3) étant maintenues en place les unes par rapport aux autres par une cage (231) :
- pour chaque rangée (40) de billes (3), il est aménagé dans l'arbre extérieur (2) une partie concave en forme de rainure axiale (202) dont la section comporte deux faces concaves (203, 204) inclinées l'une par rapport à l'autre, qui viennent en contact avec les billes (3) ;
- pour chaque rangée (40) de billes (3), il est aménagé dans l'arbre intérieur (1) une partie concave en forme de rainure axiale (201) dont la section comporte un fond (205) et deux flancs (206, 207), le fond (205) étant sensiblement perpendiculaire au plan diamétral passant par son milieu ;
- pour chaque rangée (40) de billes (3), deux chemins de roulement (210) sont disposés dans la partie concave en forme de rainure axiale (201) de l'arbre intérieur (1), chaque chemin de roulement (210) est en forme de barre axiale, dont la section a :
. une face concave (211) qui vient en contact avec les billes (3),
. deux faces contiguës (213, 212) l'une par rapport à l'autre, et qui sont disposées respectivement en face du fond (205) et d'un des flancs (206, 207) de la rainure axiale (201),
. un bourrelet (214) est aménagé sur la face (213) à l'angle de la face (212) ;
- pour chaque rangée (40) de billes (3), un élément élastique, en forme de lame axiale ondulée élastique (224), ladite lame axiale ondulée élastique (224) est disposée dans la rainure axiale (201) entre les bourrelets (214) des deux chemins de roulement (210), la lame axiale ondulée élastique (224) venant prendre appui sur le fond (205) de la rainure axiale (201), afin que ladite lame axiale ondulée élastique (224) pousse les deux chemins de roulement (210).

20. Dispositif d'accouplement selon la revendication 19, **caractérisé en ce que** chaque lame axiale ondulée élastique (224) a une extrémité axiale (227) qui est recourbée dans le sens externe et une extrémité axiale (228) qui est recourbée dans le sens interne : l'extrémité axiale externe (227) retenant l'extrémité axiale concernée des deux chemins de roulement (210) correspondants, et l'extrémité axiale interne (228) s'appuyant contre l'extrémité (234) de l'arbre intérieur (1) à l'aide d'une rondelle butée (235) qui est solidarisée avec l'extrémité (234) de l'arbre intérieur (1), afin de retenir l'autre extrémité axiale des deux chemins de roulement (210).

21. Dispositif d'accouplement selon la revendication 19, **caractérisé en ce que** chaque lame axiale ondulée élastique (224) a ses deux extrémités axiales (229) qui sont recourbées dans le même sens externe : l'une des extrémités axiales externes (229) s'appuyant contre un jonc (155) monté dans une gorge (156) aménagée dans l'arbre intérieur (1), afin de retenir l'extrémité axiale concernée des deux chemins de roulement (210) correspondants, l'autre extrémité axiale externe (229) s'appuyant contre une rondelle butée (235), qui est solidarisée avec l'extrémité (234) de l'arbre intérieur (1), afin de retenir l'autre extrémité axiale des deux chemins de roulement (210).

22. Dispositif d'accouplement selon l'une quelconque des revendications 10 à 21, **caractérisé en ce que** les billes (3) sont disposées en trois rangées axiales (40), les rangées axiales (40) étant transversalement à 120° les unes des autres :
- l'arbre intérieur (1) est muni de trois rainures axiales (41, 81, 121, 171, 201), les rainures axiales (41, 81, 121, 171, 201) étant transversalement à 120° les unes des autres ;
- l'arbre extérieur (2) est muni de trois rainures axiales (42, 82, 122, 172, 202), les rainures axiales (42, 82, 122, 172, 202) étant transversalement à 120° les unes des autres.

23. Dispositif d'accouplement selon l'une quelconque des revendications 10 à 21, **caractérisé en ce que** :
- les billes (3) sont disposées en deux rangées axiales (40) diamétralement opposées ;
- l'arbre intérieur (1) est muni de deux rainures axiales (41, 81, 121, 171, 201) diamétralement opposées ;
- l'arbre extérieur (2) est muni de deux rainures axiales (42, 82, 122, 172, 202) diamétralement opposées.

24. Dispositif d'accouplement selon l'une quelconque des revendications 10 et 12, **caractérisé en ce que** :
- l'arbre intérieur (1) est muni de trois rainures axiales (41, 81), les rainures axiales (41, 81) étant transversalement à 120° les unes des autres, dans chaque rainure axiale (41, 81) sont montés un élément élastique en forme de boudin axial élastique (57, 97) et deux chemins de roulement (50, 90) en forme de barre axiale ;
- les billes (3) sont disposées en trois rangées axiales, les rangées axiales étant transversalement à 120° les unes des autres, les billes étant maintenues en place les unes par rapport aux autres par une cage en forme de manchon ;
- l'ensemble du manchon (43) à billes (3) avec les chemins de roulement (50, 90) et les boudins axiaux élastiques (57, 97) est fermé à chaque extrémité axiale par une bague de maintien (151, 152) qui vient s'engager dans chacune des rainures axiales (41, 81) de l'arbre intérieur (1), l'une des bagues de maintien (151) s'appuyant contre un jonc (155) qui est monté dans une gorge (156) dudit arbre intérieur (1) ;
- l'arbre extérieur (2) est muni de trois rainures axiales (42, 82) transversalement à 120° les unes des autres, qui viennent coulisser sur les rangées (40) de billes (3), les rainures axiales (42, 82) ayant la longueur voulue pour permettre le coulissement axial demandé de l'arbre extérieur (2) et de l'arbre intérieur (1).

25. Dispositif d'accouplement selon l'une quelconque des revendications précédentes, **caractérisé en ce qu'**il s'applique à la partie intermédiaire (7) d'une colonne de direction de véhicule automobile.

26. Dispositif d'accouplement selon l'une quelconque des revendications 1 à 24, **caractérisé en ce qu'**il s'applique à la partie haute d'une colonne de direction de véhicule automobile.

## Patentansprüche

1. Kopplungsvorrichtung für zwei Wellen, einer inneren Welle (1) und einer äußeren Welle (2), die in Richtung ihrer gemeinsamen Achse (4) ineinander gleiten, wobei diese Vorrichtung zur Kopplung der beiden Wellen Rollelemente (3) umfasst, die zwischen der inneren Welle (1) und der äußeren Welle (2) angeordnet sind,
- jedes dieser Rollelemente (3) ist einerseits in einem konkaven Bereich (17) der inneren Welle (1) und andererseits in einem konkaven Bereich (16) der äußeren Welle (2) angeordnet;
- jedes der Rollelemente (3) ist mit mindestens einem elastischen Element versehen, das sich zwischen diesem Rollelement (3) und dem entsprechenden konkaven Bereich (17) einer der beiden Wellen (1, 2) befindet;
- die genannten Rollelemente (3) sind in mehreren axialen Reihen (40) angeordnet;
- jede axiale Reihe (40) von Rollelementen (3) befindet sich:
- einerseits in einem konkaven Bereich der inneren Welle (1), der die Form einer axialen Nut (41, 61, 81, 101, 121, 141, 171, 181, 201) hat, und
- andererseits in einem konkaven Bereich der äußeren Welle (2), der die Form einer axialen Nut (42, 62, 82, 102, 122, 142, 172, 182, 202) hat,
**dadurch gekennzeichnet, dass**
- einer dieser beiden konkaven Bereiche in Form einer axialen Nut einen Querschnitt besitzt, der einen Boden und zwei Flanken umfasst, sodass Folgendes aufgenommen werden kann:
- zwei Laufringe (50, 70, 90, 110, 130, 160, 190, 210) in Form einer axialen Leiste, die jeweils zwischen den entsprechenden Rollelementen (3) und einer der Flanken der genannten axialen Nut angeordnet sind,
- mindestens ein elastisches Element (57, 97, 134, 166, 221, 224), das zwischen dem Boden der axialen Nut und jedem der beiden Laufringe angeordnet ist, um die Laufringe gegen die entsprechenden Rollelemente zu drücken;
- sodass im Ruhezustand, wenn es keine Drehmomentübertragung gibt, jedes Rollelement (3) immer noch Kontakt auf der Seite des elastischen Elements bzw. der elastischen Elemente und der Gegenseite hat;
- und sodass, wenn es eine Drehmomentübertragung gibt, für jedes Rollelement (3) mindestens eine Auflagezone auf der Seite des elastischen Elements bzw. der elastischen Elemente und mindestens eine Auflagezone auf der Gegenseite vorhanden ist.

2. Kopplungsvorrichtung gemäß Anspruch 1, **dadurch gekennzeichnet, dass** es sich bei den Rollelementen um kleine Kugeln (3) handelt.

3. Kopplungsvorrichtung gemäß Anspruch 2, **dadurch gekennzeichnet, dass** jede der Kugeln (3) sich auf zwei Laufringen (50, 70, 90, 110) bewegt, die von demselben entsprechenden elastischen Element (57, 97) gegen diese Kugel (3) gedrückt werden; diese Laufringe (50, 70, 90, 110) sind zwischen der Kugel (3) und dem entsprechenden elastischen Element (57, 97) angeordnet.

4. Kopplungsvorrichtung gemäß Anspruch 2, **dadurch gekennzeichnet, dass** jede der Kugeln (3) sich auf zwei Laufringen (130) mit zwei elastischen Elementen (134) bewegt, wobei jeder der Laufringe (130) von dem entsprechenden elastischen Element (134) gegen die Kugel (3) gedrückt wird und jeder der Laufringe (130) zwischen der Kugel (3) und dem entsprechenden elastischen Element (134) angeordnet ist.

5. Kopplungsvorrichtung gemäß einem beliebigen der voranstehenden Ansprüche, **dadurch gekennzeichnet, dass** die Kugeln (3) in mindestens einem Haltekäfig (43, 128) angeordnet sind.

6. Kopplungsvorrichtung gemäß einem beliebigen der voranstehenden Ansprüche, **dadurch gekennzeichnet, dass** männliche (34) und weibliche (35) Nuten mit verbundenen Profilen, die ein gewisses Spiel haben, auf der inneren Welle (1) und der äußeren Welle (2) angeordnet sind, sodass im Falle eines Bruchs der Kugeln (3) das Drehmoment noch zwischen der inneren Welle (1) und der äußeren Welle (2) übertragen werden kann.

7. Kopplungsvorrichtung gemäß einem beliebigen der voranstehenden Ansprüche, **dadurch gekennzeichnet, dass** das elastische Element bzw. die elastischen Elemente (57, 97, 131) in der inneren Welle (1) angeordnet ist bzw. sind.

8. Kopplungsvorrichtung gemäß einem beliebigen der Ansprüche 1 bis 6, **dadurch gekennzeichnet, dass** das elastische Element bzw. die elastischen Elemente (57, 97, 134) in der äußeren Welle (2) angeordnet ist bzw. sind.

9. Kopplungsvorrichtung gemäß einem beliebigen der Ansprüche 1 bis 6, **dadurch gekennzeichnet, dass** einige der elastischen Elemente (57, 97, 134) in der inneren Welle (1) und die anderen in der äußereren Welle (2) angeordnet sind.

10. Kopplungsvorrichtung gemäß Anspruch 3, **dadurch gekennzeichnet, dass** die Kugeln (3) in mehreren axialen Reihen (40) angeordnet sind; dabei werden die Kugeln (3) im Verhältnis zueinander durch einen Käfig (43) in Position gehalten:
- für jede Reihe (40) von Kugeln (3) weist die äußere Welle (2) einen konkaven Bereich in Form einer axialen Nut (42) auf, deren Querschnitt zwei konkave Seiten (44, 45) umfasst, die einander zugeneigt sind und die in Kontakt mit den Kugeln (3) kommen;
- für jede Reihe (40) von Kugeln (3) weist die innere Welle (1) einen konkaven Bereich in Form einer axialen Nut (41) auf, deren Querschnitt einen Boden (46) und zwei Flanken (47, 48) umfasst, wobei der Boden (46) im Wesentlichen senkrecht zur diametralen Ebene ist, die durch seine Mitte verläuft;
- für jede Reihe (40) von Kugeln (3) sind in dem konkaven Bereich der inneren Welle (1), der die Form einer axialen Nut (41) hat, zwei Laufringe (50) angeordnet, und jeder Laufring (50) besitzt die Form einer axialen Leiste, deren Querschnitt Folgendes aufweist:
- eine konkave Seite (51), die in Kontakt mit den Kugeln (3) kommt,
- zwei aneinander grenzende Seiten (53, 52), die jeweils gegenüber dem Boden (46) und einer der Flanken (47, 48) der axialen Nut (41) angeordnet sind,
- eine Seite (54), die zum Boden (46) der axialen Nut (41) schräg steht;
- für jede Reihe (40) von Kugeln (3) befindet sich in der axialen Nut (41) zwischen den beiden Laufringen (50) ein elastisches Element in Form einer axialen elastischen Wulst (57) mit rundem Querschnitt, wobei diese axiale elastische Wulst (57) auf dem Boden (46) der axialen Nut (41) zur Anlage kommt, um auf die geneigte Seite (54) eines jeden der beiden Laufringe (50) Druck auszuüben.

11. Kopplungsvorrichtung gemäß Anspruch 3, **dadurch gekennzeichnet, dass** die Kugeln (3) in mehreren axialen Reihen (40) angeordnet sind, wobei die Kugeln (3) im Verhältnis zueinander durch einen Käfig (43) in Position gehalten werden:
- für jede Reihe (40) von Kugeln (3) weist die innere Welle (1) einen konkaven Bereich in Form einer axialen Nut (61) auf, deren Querschnitt zwei konkave Seiten (63, 64) umfasst, die einander zugeneigt sind und die in Kontakt mit den Kugeln (3) kommen;
- für jede Reihe (40) von Kugeln (3) weist die äußere Welle (2) einen konkaven Bereich in Form einer axialen Nut (62) auf, deren Querschnitt einen Boden (65) und zwei Flanken (66, 67) umfasst, wobei der Boden (65) im Wesentlichen senkrecht zur diametralen Ebene ist, die durch seine Mitte verläuft;
- für jede Reihe (40) von Kugeln (3) sind in dem konkaven Bereich der äußeren Welle (2), der die Form einer axialen Nut (62) hat, zwei Laufringe (70) angeordnet, und jeder Laufring (70) besitzt die Form einer axialen Leiste, deren Querschnitt Folgendes aufweist:
- eine konkave Seite (71), die in Kontakt mit den Kugeln (3) kommt,
- zwei aneinander grenzende Seiten (73, 72), die jeweils gegenüber dem Boden (65) und einer der Flanken (66, 67) der axialen Nut (62) angeordnet sind,
- eine Seite (74), die zum Boden (65) der axialen Nut (62) schräg steht;
- für jede Reihe (40) von Kugeln (3) befindet sich in der axialen Nut (62) zwischen den beiden Laufringe (70) ein elastisches Element in Form einer axialen elastischen Wulst (57) mit rundem Querschnitt, wobei diese axiale elastische Wulst (57) auf dem Boden (65) der axialen Nut (62) zur Anlage kommt, um auf die geneigte Seite (74) eines jeden der beiden Laufringe (70) Druck auszuüben.

12. Kopplungsvorrichtung gemäß Anspruch 3, **dadurch gekennzeichnet, dass** die Kugeln (3) in mehreren axialen Reihen (40) angeordnet sind, wobei die Kugeln (3) im Verhältnis zueinander durch einen Käfig (43) in Position gehalten werden:
- für jede Reihe (40) von Kugeln (3) weist die äußere Welle (2) einen konkaven Bereich in Form einer axialen Nut (82) auf, deren Querschnitt zwei konkave Seiten (83, 84) umfasst, die einander zugeneigt sind und die in Kontakt mit den Kugeln (3) kommen;
- für jede Reihe (40) von Kugeln (3) weist die innere Welle (1) einen konkaven Bereich in Form einer axialen Nut (81) auf, deren Querschnitt einen Boden (85) und zwei Flanken (86, 87) umfasst, wobei der Boden (85) im Wesentlichen senkrecht zur diametralen Ebene ist, die durch seine Mitte verläuft;
- für jede Reihe (40) von Kugeln (3) sind in dem konkaven Bereich der inneren Welle (1), der die Form einer axialen Nut (81) hat, zwei Laufringe (90) angeordnet, und jeder Laufring (90) besitzt die Form einer axialen Leiste, deren Querschnitt Folgendes aufweist:
- eine konkave Seite (91), die in Kontakt mit den Kugeln (3) kommt,
- zwei aneinander grenzende Seiten (93, 92), die jeweils gegenüber dem Boden (85) und einer der Flanken (86, 87) der axialen Nut (81) angeordnet sind,
- eine wulstartige Verdickung (94), die auf der Seite (93) in der Ecke der Seite (92) angebracht ist;
- für jede Reihe (40) von Kugeln (3) ein elastisches Element in Form einer axialen elastischen Wulst (97), deren Querschnitt einen axialen Sockel (98) und zwei axiale Ausstülpungen (99) aufweist, wobei diese axiale elastische Wulst (97) in der axialen Nut (81) zwischen den Verdickungen (94) der beiden Laufringe (90) angeordnet ist und der axiale Sockel (98) auf dem Boden (85) der axialen Nut (81) zur Anlage kommt, sodass jede der beiden axialen Ausstülpungen (99) Druck auf den entsprechenden Laufring (90) ausübt.

13. Kopplungsvorrichtung gemäß Anspruch 3, **dadurch gekennzeichnet, dass** die Kugeln (3) in mehreren axialen Reihen (40) angeordnet sind, wobei die Kugeln (3) im Verhältnis zueinander durch einen Käfig (43) in Position gehalten werden:
- für jede Reihe (40) von Kugeln (3) weist die innere Welle (1) einen konkaven Bereich in Form einer axialen Nut (101) auf, deren Querschnitt zwei gebogene Seiten (103, 104) umfasst, die einander zugeneigt sind und die in Kontakt mit den Kugeln (3) kommen;
- für jede Reihe (40) von Kugeln (3) weist die äußere Welle (2) einen konkaven Bereich in Form einer axialen Nut (102) auf, deren Querschnitt einen Boden (105) und zwei Flanken (106, 107) umfasst, wobei der Boden (105) im Wesentlichen senkrecht zur diametralen Ebene ist, die durch seine Mitte verläuft;
- für jede Reihe (40) von Kugeln (3) sind in dem konkaven Bereich der äußeren Welle (2), der die Form einer axialen Nut (102) hat, zwei Laufringe (110) angeordnet, und jeder Laufring (110) besitzt die Form einer axialen Leiste, deren Querschnitt Folgendes aufweist:
- eine konkave Seite (111), die in Kontakt mit den Kugeln (3) kommt,
- zwei aneinander grenzende Seiten (113, 112), die jeweils gegenüber dem Boden (105) und einer der Flanken (106, 107) der axialen Nut (101) angeordnet sind,
- eine Verdickung (114) befindet sich auf der Seite (113) in der Ecke der Seite (112);
- für jede Reihe (40) von Kugeln (3) ein elastisches Element in Form einer axialen elastischen Wulst (97), deren Querschnitt einen axialen Sockel (98) und zwei axiale Ausstülpungen (99) aufweist, wobei diese axiale elastische Wulst (97) in der axialen Nut (102) zwischen den Verdickungen (114) der beiden Laufringe (110) angeordnet ist und der axiale Sockel (98) auf dem Boden (105) der axialen Nut (102) zur Anlage kommt, sodass jede der beiden axialen Ausstülpungen (99) Druck auf den entsprechenden Laufring (110) ausübt.

14. Kopplungsvorrichtung gemäß Anspruch 4, **dadurch gekennzeichnet, dass** die Kugeln (3) in mehreren axialen Reihen (40) angeordnet sind, wobei die Kugeln (3) einer jeden axialen Reihe (40) im Verhältnis zueinander durch einen Käfig (128) in Position gehalten werden;
- für jede Reihe (40) von Kugeln (3) weist die äußere Welle (2) einen konkaven Bereich in Form einer axialen Nut (122) auf, deren Querschnitt zwei gebogene Seiten (123, 124) umfasst, die einander zugeneigt sind und die in Kontakt mit den Kugeln (3) kommen;
- für jede Reihe (40) von Kugeln (3) weist die innere Welle (1) einen konkaven Bereich in Form einer axialen Nut (121) auf, deren Querschnitt einen Boden (125) und zwei Flanken (126, 127) umfasst, wobei der Boden (125) im Wesentlichen senkrecht zur diametralen Ebene ist, die durch seine Mitte verläuft;
- für jede Reihe (40) von Kugeln (3) sind in dem konkaven Bereich der inneren Welle (1), der die Form einer axialen Nut (121) hat, zwei Laufringe (130) angeordnet, und jeder Laufring (130) besitzt die Form einer axialen Leiste, deren Querschnitt eine gebogene Form aufweist, sodass sie in Kontakt mit den Kugeln (3) kommt;
- für jede Reihe (40) von Kugeln (3) befinden sich in der axialen Nut (121) zwei elastische Elemente in Form einer axialen elastischen Wulst (134), wobei jedes elastische Element (134)
auf dem Boden (125) und auf einer der Flanken (126, 127) der axialen Nut (121) zur Anlage kommt, um auf den entsprechenden Laufring (130) Druck auszuüben.

15. Kopplungsvorrichtung gemäß Anspruch 4, **dadurch gekennzeichnet, dass** die Kugeln (3) in mehreren axialen Reihen (40) angeordnet sind, wobei die Kugeln (3) einer jeden axialen Reihe (40) im Verhältnis zueinander durch einen Käfig (128) in Position gehalten werden;
- für jede Reihe (40) von Kugeln (3) weist die innere Welle (1) einen konkaven Bereich in Form einer axialen Nut (141) auf, deren Querschnitt zwei gebogene Seiten (143, 144) umfasst, die einander zugeneigt sind und die in Kontakt mit den Kugeln (3) kommen;
- für jede Reihe (40) von Kugeln (3) weist die äußere Welle (2) einen konkaven Bereich in Form einer axialen Nut (142) auf, deren Querschnitt einen Boden (145) und zwei Flanken (146, 147) umfasst, wobei der Boden (145) im Wesentlichen senkrecht zur diametralen Ebene ist, die durch seine Mitte verläuft;
- für jede Reihe (40) von Kugeln (3) sind in dem konkaven Bereich der äußeren Welle (2), der die Form einer axialen Nut (142) hat, zwei Laufringe (130) angeordnet, und jeder Laufring (130) besitzt die Form einer axialen Leiste, deren Querschnitt eine gebogene Form aufweist, sodass sie in Kontakt mit den Kugeln (3) kommt;
- für jede Reihe (40) von Kugeln (3) befinden sich in der axialen Nut (142) zwei elastische Elemente in Form einer axialen elastischen Wulst (134), wobei jedes elastische Element (134) auf dem Boden (145) und auf einer der Flanken (146, 147) der axialen Nut (142) zur Anlage kommt, um auf den entsprechenden Laufring (130) Druck auszuüben.

16. Kopplungsvorrichtung gemäß Anspruch 4, **dadurch gekennzeichnet, dass** die Kugeln (3) in mehreren axialen Reihen (40) angeordnet sind, wobei die Kugeln (3) einer jeden axialen Reihe (40) im Verhältnis zueinander durch einen Käfig (43) in Position gehalten werden;
- für jede Reihe (40) von Kugeln (3) weist die äußere Welle (2) einen konkaven Bereich in Form einer axialen Nut (172) auf, deren Querschnitt zwei gebogene Seiten (173, 174) umfasst, die einander zugeneigt sind und die in Kontakt mit den Kugeln (3) kommen;
- für jede Reihe (40) von Kugeln (3) weist die innere Welle (1) einen konkaven Bereich in Form einer axialen Nut (171) auf, deren Querschnitt einen Boden (175) und zwei Flanken (176, 177) umfasst, wobei der Boden (175) im Wesentlichen senkrecht zur diametralen Ebene ist, die durch seine Mitte verläuft;
- für jede Reihe (40) von Kugeln (3) sind in dem konkaven Bereich der inneren Welle (1), der die Form einer axialen Nut (171) hat, zwei Laufringe (160) angeordnet, und jeder Laufring (160) besitzt die Form einer axialen Leiste, deren Querschnitt Folgendes aufweist:
- eine Seite (161), die in Kontakt mit den Kugeln (3) kommt,
- zwei aneinander grenzende Seiten (163 und 162), die jeweils gegenüber dem Boden (175) und einer der Flanken (176, 177) der axialen Nut (171) angeordnet sind,
- eine Seite (164), die an die Seite (163) angrenzt und im Wesentlichen senkrecht zu dieser Seite (163) ist, wobei die beiden Seiten (164) im Wesentlichen parallel zur diametralen Ebene sind, die durch die Mitte des Bodens (175) verläuft; der Raum zwischen den beiden Seiten (164) bietet im Ruhezustand und bei der Drehmomentübertragung ausreichendes Spiel;
- für jede Reihe (40) von Kugeln (3) ist in einer axialen Nut (165), die sich in dem entsprechenden Laufring (160) befindet, jeweils eines von zwei elastischen Elementen in Form eines axialen elastischen Elements (166), angeordnet, wobei jedes elastische Element (166) auf dem Boden (175) der axialen Nut (171) zur Anlage kommt, um auf den entsprechenden Laufring (160) Druck auszuüben.

17. Kopplungsvorrichtung gemäß Anspruch 4, **dadurch gekennzeichnet, dass** die Kugeln (3) in mehreren axialen Reihen (40) angeordnet sind, wobei die Kugeln (3) einer jeden axialen Reihe (40) im Verhältnis zueinander durch einen Käfig (43) in Position gehalten werden;
- für jede Reihe (40) von Kugeln (3) weist die innere Welle (1) einen konkaven Bereich in Form einer axialen Nut (181) auf, deren Querschnitt zwei gebogene Seiten (183, 184) umfasst, die einander zugeneigt sind und die in Kontakt mit den Kugeln (3) kommen;
- für jede Reihe (40) von Kugeln (3) weist die äußere Welle (2) einen konkaven Bereich in Form einer axialen Nut (171) auf, deren Querschnitt einen Boden (185) und zwei Flanken (186, 187) umfasst, wobei der Boden (185) im Wesentlichen senkrecht zur diametralen Ebene ist, die durch seine Mitte verläuft;
- für jede Reihe (40) von Kugeln (3) sind in dem konkaven Bereich der äußeren Welle (2), der die Form einer axialen Nut (181) hat, zwei Laufringe (190) angeordnet, und jeder Laufring (190) besitzt die Form einer axialen Leiste, deren Querschnitt Folgendes aufweist:
- eine Seite (191), die in Kontakt mit den Kugeln (3) kommt,
- zwei aneinander grenzende Seiten (193 und 192), die jeweils gegenüber dem Boden (185) und einer der Flanken (186, 187) der axialen Nut (182) angeordnet sind,
- eine Seite (194), die an die Seite (193) angrenzt und im Wesentlichen senkrecht zu dieser Seite (193) ist, wobei die beiden Seiten (194) im Wesentlichen parallel zur diametralen Ebene sind, die durch die Mitte des Bodens (185) verläuft; der Raum zwischen den beiden Seiten (194) bietet im Ruhezustand und bei der Drehmomentübertragung ausreichendes Spiel;
- für jede Reihe (40) von Kugeln (3) ist in einer axialen Nut (195), die in dem entsprechenden Laufring (190) angeordnet ist, jeweils eines von zwei elastischen Elementen in Form eines axialen elastischen Elements (166) angebracht, wobei jedes elastische Element (166) auf dem Boden (185) zur Anlage kommt, um auf die entsprechende Laufring (190) Druck auszuüben.

18. Kopplungsvorrichtung gemäß Anspruch 3, **dadurch gekennzeichnet, dass** die Kugeln (3) in mehreren axialen Reihen (40) angeordnet sind, wobei die Kugeln (3) im Verhältnis zueinander durch einen Käfig (231) in Position gehalten werden:
- für jede Reihe (40) von Kugeln (3) weist die äußere Welle (2) einen konkaven Bereich in Form einer axialen Nut (202) auf, deren Querschnitt zwei konkave Seiten (203, 204) umfasst, die einander zugeneigt sind und die in Kontakt mit den Kugeln (3) kommen;
- für jede Reihe (40) von Kugeln (3) weist die innere Welle (1) einen konkaven Bereich in Form einer axialen Nut (201) auf, deren Querschnitt einen Boden (205) und zwei Flanken (206, 207) umfasst, wobei der Boden (205) im Wesentlichen senkrecht zur diametralen Ebene ist, die durch seine Mitte verläuft;
- für jede Reihe (40) von Kugeln (3) sind in dem konkaven Bereich der inneren Welle (1), der die Form einer axialen Nut (201) hat, zwei Laufringe (210) angeordnet, und jeder Laufring (210) besitzt die Form einer axialen Leiste, deren Querschnitt Folgendes aufweist:
- eine konkave Seite (211), die in Kontakt mit den Kugeln (3) kommt,
- zwei aneinander grenzende Seiten (213, 212), die jeweils gegenüber dem Boden (205) und einer der Flanken (206, 207) der axialen Nut (201) angeordnet sind,
- eine Verdickung (214) befindet sich auf der Seite (213) in der Ecke der Seite (212);
- für jede Reihe (40) von Kugeln (3) ein elastisches Element, das spiralförmige Federn (221) umfasst, wobei diese spiralförmige Federn in der axialen Nut (201) zwischen den Verdickungen (214) der beiden Laufringe (210) angeordnet sind und der Sockel (221) dieser spiralförmigen Federn (221) auf dem Boden (205) der axialen Nut (201) zur Anlage kommt, sodass die spiralförmigen Federn (221) Druck auf die beiden Laufringe (210) ausüben.

19. Kopplungsvorrichtung gemäß Anspruch 3, **dadurch gekennzeichnet, dass** die Kugeln (3) in mehreren axialen Reihen (40) angeordnet sind, wobei die Kugeln (3) im Verhältnis zueinander durch einen Käfig (231) in Position gehalten werden:
- für jede Reihe (40) von Kugeln (3) weist die äußere Welle (2) einen konkaven Bereich in Form einer axialen Nut (202) auf, deren Querschnitt zwei konkave Seiten (203, 204) umfasst, die einander zugeneigt sind und die in Kontakt mit den Kugeln (3) kommen;
- für jede Reihe (40) von Kugeln (3) weist die innere Welle (1) einen konkaven Bereich in Form einer axialen Nut (201) auf, deren Querschnitt einen Boden (205) und zwei Flanken (206, 207) umfasst, wobei der Boden (205) im Wesentlichen senkrecht zur diametralen Ebene ist, die durch seine Mitte verläuft;
- für jede Reihe (40) von Kugeln (3) sind in dem konkaven Bereich der inneren Welle (1), der die Form einer axialen Nut (201) hat, zwei Laufringe (210) angeordnet, und jeder Laufring (210) besitzt die Form einer axialen Leiste, deren Querschnitt Folgendes aufweist:
- eine konkave Seite (211), die in Kontakt mit den Kugeln (3) kommt,
- zwei aneinander grenzende Seiten (213, 212), die jeweils gegenüber dem Boden (205) und einer der Flanken (206, 207) der axialen Nut (201) angeordnet sind,
- eine Verdickung (214), die sich auf der Seite (213) in der Ecke der Seite (212) befindet;
- für jede Reihe (40) von Kugeln (3) ein elastisches Element in Form einer elastischen, axialen, gewellten Lamelle (224), wobei diese elastische, axiale, gewellte Lamelle (224) in der axialen Nut (201) zwischen den Verdickungen (214) der beiden Laufringe (210) angeordnet ist; die elastische, axiale, gewellte Lamelle kommt auf dem Boden (205) der axialen Nut (201) zur Anlage, sodass die elastische, axiale, gewellte Lamelle (224) Druck auf die beiden Laufringe (210) ausübt.

20. Kopplungsvorrichtung gemäß Anspruch 19, **dadurch gekennzeichnet, dass** die elastische, axiale, gewellte Lamelle (224) ein axiales Ende (227) aufweist, das nach außen gebogen ist, und ein axiales Ende (228), das nach innen gebogen ist: Das äußere axiale Ende (227) hält das betreffende axiale Ende der beiden entsprechenden Laufringe (210), und das innere axiale Ende (228) drückt sich mittels einer Druckscheibe (235), die mit dem Ende (234) der inneren Welle (1) fest verbunden ist, gegen das Ende (234) der inneren Welle (1), um das andere axiale Ende der beiden Laufringe (210) zu halten.

21. Kopplungsvorrichtung gemäß Anspruch 19, **dadurch gekennzeichnet, dass** die elastische, axiale, gewellte Lamelle (224) zwei axiale Enden (229) aufweist, die beide in dieselbe Richtung nach außen gebogen sind: Eines der äußeren axialen Enden (229) drückt sich gegen einen Sprengring (155), der in einer Rille (156) montiert ist, die sich in der inneren Welle (1) befindet, um so das betreffende axiale Ende der beiden entsprechenden Laufbahnen (210) zu halten; das andere äußere axiale Ende (229) drückt sich gegen eine Druckscheibe (235), die mit dem Ende (234) der inneren Welle (1) fest verbunden ist, um so das andere axiale Ende der beiden Laufringe (210) zu halten.

22. Kopplungsvorrichtung gemäß einem beliebigen der Ansprüche 10 bis 21, **dadurch gekennzeichnet, dass** die Kugeln (3) in drei axialen Reihen (40) angeordnet sind, wobei die axialen Reihen (40) 120° quer zueinander ausgerichtet sind:
- die innere Welle (1) weist drei axiale Nuten (41, 81, 121, 171, 201) auf, wobei diese axiale Nuten (41, 81, 121, 171, 201) 120° quer zueinander verlaufen;
- die äußere Welle (2) weist drei axiale Nuten (42, 82, 122, 172, 202) auf, wobei diese axiale Nuten (41, 81, 121, 171, 201) 120° quer zueinander verlaufen.

23. Kopplungsvorrichtung gemäß einem beliebigen der Ansprüche 10 bis 21, **dadurch gekennzeichnet, dass**:
- die Kugeln (3) in zwei axialen Reihen (40) angeordnet sind, die sich diametral gegenüberliegen;
- die innere Welle (1) zwei axiale Nuten (41, 81, 121, 171, 201) aufweist, die sich diametral gegenüberliegen;
- die äußere Welle (2) zwei axiale Nuten (42, 82, 122, 171, 202) aufweist, die sich diametral gegenüberliegen;

24. Kopplungsvorrichtung gemäß einem beliebigen der Ansprüche 10 und 12, **dadurch gekennzeichnet, dass**:
- die innere Welle (1) drei axiale Nuten (41, 81) aufweist, wobei die axialen Nuten (41, 81) 120° Grad quer zueinander verlaufen und in jede axiale Nut (41, 81) ein elastisches Element in Form einer elastischen axialen Wulst (57, 97) sowie zwei Laufringe (50, 90) in Form einer axialen Leiste montiert sind;
- die Kugeln (3) in drei axialen Reihen angeordnet sind, wobei die axialen Reihen 120° Grad quer zueinander verlaufen und die Kugeln im Verhältnis zueinander durch einen Käfig in Form einer Muffe in Position gehalten werden;
- der Muffenkomplex (43) mit den Kugeln (3) und mit den Laufringen (50, 90) und den elastischen axialen Wülsten (57, 97) an jedem axialen Ende durch einen Haltering (151, 151) abgeschlossen ist, der in jede der axialen Nuten (41, 81) der inneren Welle eingreift, wobei einer der Halteringe (151) sich gegen einen Sprengring (155) drückt, der in eine Rille (156) der inneren Welle (1) montiert ist;
- die äußere Welle (2) drei axiale Nuten (42, 82) aufweist, die 120° quer zueinander verlaufen und die auf den in Reihen (40) angeordneten Kugeln (3) gleiten, wobei die axialen Nuten (42, 82) die gewünschte Länge haben, um das axiale Gleiten zu gestatten, das von der äußeren Welle (2) und der inneren Welle (1) verlangt wird.

25. Kopplungsvorrichtung gemäß einem beliebigen der voranstehenden Ansprüche, **dadurch gekennzeichnet, dass** sie für das Zwischenteil (7) einer Lenksäule eines Kraftfahrzeugs gilt.

26. Kopplungsvorrichtung gemäß einem beliebigen der Ansprüche 1 bis 24, **dadurch gekennzeichnet, dass** sie für den oberen Teil einer Lenksäule eines Kraftfahrzeugs gilt.

## Claims

1. A system for coupling an inner shaft (1) and an outer shaft (2) which slide one within the other in the direction of a common axis (4), said two-shafts coupling system including rolling members (3) which are disposed between the inner shaft (1) and the outer shaft (2),
- each of said rolling members (3) is disposed on the one hand in a concave part (17) of the inner shaft (1) and on the other hand in a concave part (16) of the outer shaft (2);
- each of said rolling members (3) is associated with at least one spring member which is disposed between said rolling member (3) and the corresponding concave part (17) of one of the two shafts (1, 2);
- said rolling members (3) are arranged in a plurality of axial rows (40);
- each axial row (40) of rolling members (3) is disposed:
. on the one hand in a concave part in the form of an axial groove (41, 61, 81, 101, 121, 141, 171, 181, 201) of the inner shaft (1), and
. on the other hand in a concave part in the form of an axial groove (42, 62, 82, 102, 122, 142, 172, 182, 202) of the outer shaft (2);
the coupling system is **characterized in that** :
- one of said two concave parts in the form of axial groove has a cross-section which includes a back and two flanks to receive:
. two races (50, 70, 90, 110, 130, 160, 190, 210) in the form of an axial bar which are each disposed between the corresponding rolling members (3) and one of the flanks of said axial groove, and
. at least one spring member (57, 97, 134, 166, 221, 224) disposed between the back of said axial groove and each of the two races in order to press said races against the corresponding rolling members;
- so that at rest and when no torque is transmitted, each rolling member (3) is always in bearing engagement on the same side as the spring member(s) and on the opposite side, and
- so that when torque is transmitted there is for each rolling member (3), at least one bearing area on the same side as the spring member(s) and at least one bearing area on the opposite side.

2. A coupling system according to claim 1, **characterized in that** the rolling members are balls (3).

3. A coupling system according to claim 2, **characterized in that** each of the balls (3) moves on two races (50, 70, 90, 110) which are pressed against said ball (3) by the same corresponding spring member (57, 97); said races (50, 70, 90, 110) being disposed between said ball (3) and the corresponding spring member (57, 97).

4. A coupling system according to claim 2, **characterized in that** each ball (3) moves on two races (130) and is associated with two spring members (134), each race (130) is pressed against said ball (3) by the corresponding spring member (134), each of said races (130) is disposed between said ball (3) and the corresponding spring member (134).

5. A coupling system according to any one of preceding claims, **characterized in that** the balls (3) are disposed in at least one retaining cage (43, 128).

6. A coupling system according to any one of preceding claims, **characterized in that** male grooves (34) and female grooves (35) with conjugate profiles and with some clearance are formed on the inner shaft (1) and outer (2) shaft so that torque can still be transmitted between the inner shaft (1) and the outer shaft (2) if the balls (3) rupture.

7. A coupling system according to any one of preceding claims, **characterized in that** the spring member(s) (57, 97, 131) is/are disposed in the inner shaft (1).

8. A coupling system according to any one of claims 1 to 6, **characterized in that** the spring member (s) (57, 97, 134) is/are disposed in the outer shaft (2).

9. A coupling system according to any one of claims 1 to 6, **characterized in that** the some spring members (57, 97, 134) are disposed in the inner shaft (1) and others spring members in the outer shaft (2).

10. A coupling system according to claim 3, **characterized in that** the balls (3) are disposed in a plurality of axial rows (40) and held in place relative to each other by a cage (43):
- for each row (40) of balls (3), a concave part (42) is formed in the outer shaft (2) in the form of axial groove whose cross-section includes two concave faces (44, 45) which are inclined to each other and in bearing engagement with the balls (3);
- for each row (40) of balls (3), a concave part (41) is formed in the inner shaft (1) in the form of axial groove whose cross-section includes a back (46) and two flanks (47, 48),the back (46) being substantially perpendicular to a diametral plane passing through its center;
- for each row (40) of balls (3), two races (50) are disposed in the concave part in the form of axial groove (41) of the inner shaft (1) and each race (50) is in the form of an axial bar whose cross-section includes:
. a concave face (51) in bearing engagement with the balls (3),
. two faces (53, 52) which are contiguous with each other and which respectively face the back (46) and one of the flanks (47, 48) of the axial groove (41),
. a face (54) which is inclined to the back (46) of the axial groove (41);
- for each row (40) of balls (3), a spring member in the form of an axial coil spring (57) whose section is circular is disposed in the axial groove (41) between the two races (50) and said axial coil spring (57) bears on the back (46) of the axial groove (41) to apply thrust to the inclined face (54) of each of the two races (50).

11. A coupling system according to claim 3, **characterized in that** the balls (3) are disposed in a plurality of axial rows (40) and held in place relative to each other by a cage (43):
- for each row (40) of balls (3), a concave part (61) is formed in the inner shaft (1) in the form of axial groove whose cross-section includes two concave faces (63, 64) which are inclined to each other and in bearing engagement with the balls (3);
- for each row (40) of balls (3), a concave part (62) is formed in the outer shaft (2) in the form of axial groove whose cross-section includes a back (65) and two flanks (66, 67) and the back (65) being substantially perpendicular to a diametral plane passing through its center;
- for each row (40) of balls (3), two races (70) are disposed in the concave part in the form of axial groove (62) of the outer shaft (2) and each race (70) is in the form of an axial bar whose cross-section includes:
• a concave face (71) in bearing engagement with the balls (3),
• two faces (73, 72) which are contiguous with each other and which respectively face the back (65) and one of the flanks (66, 67) of the axial groove (62), and
• a face (74) which is inclined to the back (65) of the axial groove (62);
- for each row (40) of balls (3), a spring member in the form of an axial coil spring (57) whose section is circular is disposed in the axial groove (62) between the two races (70), said axial coil spring (57) bears on the back (65) of the axial groove (62) to apply thrust to the inclined face (74) of each of the two races (70).

12. A coupling system according to claim 3, **characterized in that** the balls (3) are disposed in a plurality of axial rows (40) and held in place relative to each other by a cage (43):
- for each row (40) of balls (3), a concave part (82) is formed in the outer shaft (2) in the form of axial groove whose cross-section includes two concave faces (83, 84) which are inclined to each other and in bearing engagement with the balls (3);
- for each row (40) of balls (3), a concave part (81) is formed in the inner shaft (1) in the form of axial groove whose cross-section includes a back (85) and two flanks (86, 87) and the back (85) is substantially perpendicular to a diametral plane passing through its center;
- for each row (40) of balls (3), two races (90) are disposed in the concave part in the form of axial groove (81) of the inner shaft (1) and each race (90) is in the form of an axial bar whose cross-section includes:
. a concave face (91) in bearing engagement with the balls (3),
. two faces (93, 92) which are contiguous with each other and which respectively face the back (85) and one of the flanks (86, 87) of the axial groove (81), and
. a bead (94) which is formed on the face (93) at the corner of the face (92);
- for each row (40) of balls (3), a spring member in the form of an axial coil spring (97) whose section has an axial base (98) and two axial protuberances (99), said axial coil spring is disposed in the axial groove (81) between the beads (94) of the two races (90), the axial base (98) bearing on the back (85) of the axial groove (81) so that each of the two axial protuberances (99) applies thrust to the corresponding race (90).

13. A coupling system according to claim 3, **characterized in that** the balls (3) are disposed in a plurality of axial rows (40) and held in place relative to each other by a cage (43):
- for each row (40) of balls (3), a concave part (101) is formed in the inner shaft (1) in the form of axial groove whose cross-section includes two curved faces (103, 104) which are inclined to each other and in bearing engagement with the balls (3);
- for each row (40) of balls (3), a concave part (102) is formed in the outer shaft (2) in the form of axial groove whose cross-section includes a back (105) and two flanks (106, 107) and the back (105) is substantially perpendicular to a diametral plane passing through its center;
- for each row (40) of balls (3), two races (110) are disposed in the concave part in the form of axial groove (102) of the outer shaft (2) and each race (110) is in the form of an axial bar whose cross-section includes:
. a concave face (111) in bearing engagement with the balls (3),
. two faces (113, 112) which are contiguous with each other and which respectively face the back (105) and one of the flanks (106; 107) of the axial groove (101),
. a bead (114) which is formed on the face (113) at the corner of the face (112);
- for each row (40) of balls (3), a spring member in the form of an axial coil spring (97) whose section has an axial base (98) and two axial protuberances (99), said axial coil spring (97) is disposed in the axial groove (102) between the beads (114) of the two races (110), the axial base (98) bearing on the back (85) of the axial groove (102) so that each of the two axial protuberances (99) applies thrust to the corresponding race (110).

14. A coupling system according to claim 4, **characterized in that** the balls (3) are disposed in a plurality of axial rows (40) and the balls (3) of each axial row (40) are held in place relative to each other by a cage (128):
- for each row (40) of balls (3.), a concave part (122) is formed in the outer shaft (2) in the form of axial groove whose cross-section includes two curved faces (123, 124) which are inclined to each other and in bearing engagement with the balls (3);
- for each row (40) of balls (3), a concave part (121) is formed in the inner shaft (1) in the form of axial groove whose cross-section includes a back (125) and two flanks (126, 127) and the back (125) is substantially perpendicular to a diametral plane passing through its center;
- for each row (40) of balls (3), two races (130) are disposed in the concave axial part in the form of groove (121) of the inner shaft (1) and each race (130) is in the form of an axial bar whose cross-section is curved in order to come into bearing engagement with the balls (3);
- for each row (40) of balls (3), two spring members in the form of axial coil springs (134) are disposed in the axial groove (121) and each of the axial coil springs (134) bears on the back (125) and on one of the flanks (126, 127) of the axial groove (121) to apply thrust to the corresponding race (130).

15. A coupling system according to claim 4, **characterized in that** the balls (3) are disposed in a plurality of axial rows (40), and the balls (3) of each axial row (40) are held in place relative to each other by a cage (128):
- for each row (40) of balls (3), a concave part (141) is formed in the inner shaft (1) in the form of axial groove whose cross-section includes two curved faces (143, 144) which are inclined to each other and in bearing engagement with the balls (3);
- for each row (40) of balls (3), a concave part (142) is formed in the outer shaft (2) in the form of axial groove whose cross-section includes a back (145) and two flanks (146, 147) and the back (145) is substantially perpendicular to a diametral plane passing through its center;
- for each row (40) of balls (3), two races (130) are disposed in the concave part in the form of axial groove (142) of the outer shaft (2) and each race (130) is in the form of an axial bar whose cross-section is curved in order to come into bearing engagement with the balls (3);
- for each row (40) of balls (3), two spring members in the form of axial coil springs (134) are disposed in the axial groove (142) and each of the axial coil springs (134) bears on the back (145) and on one of the flanks (146, 147) of the axial groove (142) to apply thrust to the corresponding race (130).

16. A coupling system according to claim 4, **characterized in that** the balls (3) are disposed in a plurality of axial rows (40) and the balls (3) are held in place relative to each other by a cage (43):
- for each row (40) of balls (3), a concave part (172) is formed in the outer shaft (2) in the form of axial groove whose cross-section includes two curved faces (173, 174) which are inclined to each other and in bearing engagement with the balls (3);
- for each row (40) of balls (3), a concave part (171) is formed in the inner shaft (1) in the form of axial groove whose cross-section includes a back (175) and two flanks (176, 177) and the back (175) is substantially perpendicular to a diametral plane passing through its center;
- for each row (40) of balls (3), two races (160) are disposed in the concave part in the form of axial groove (171) of the inner shaft (1) and each race (160) is in the form of an axial bar whose cross-section includes:
. a face (161) in bearing engagement with the balls (3),
. two faces (163 and 162) which are contiguous with each other and which respectively face the back (175) and one of the flanks (176, 177) of the axial groove (171),
. a face (164) contiguous to the face (163) and substantially perpendicular to said face (163), the two faces (164) being substantially parallel to a diametral plane passing through the center of the back (175); the space between the two faces (164) providing sufficient clearance at rest and when torque is transmitted;
- for each row (40) of balls (3), two spring members in the form of axial spring member (166) are each disposed in an axial groove (165) formed in the corresponding race (160) and each spring member (166) bears on the back (175) of the axial groove (171) in order to apply thrust to the corresponding race (160).

17. A coupling system according to claim 4, **characterized in that** the balls (3) are disposed in a plurality of axial rows (40) and the balls (3) are held in place relative to each other by a cage (43):
- for each row (40) of balls (3), a concave part (181) is formed in the inner shaft (1) in the form of axial groove whose cross-section includes two curved faces (183, 184) which are inclined to each other and in bearing engagement with the balls (3);
- for each row (40) of balls (3), a concave part (182) is formed in the outer shaft (2) in the form of axial groove whose cross-section includes a back (185) and two flanks (186, 187) and the back (185) is substantially perpendicular to a diametral plane passing through its center;
- for each row (40) of balls (3), two races (190) are disposed in the concave part in the form of axial groove (182) of the outer shaft (2) and each race (190) is in the form of an axial bar whose cross-section includes:
. a face (191) in bearing engagement with the balls (3),
. two faces (193 and 192) which are contiguous with each other and which respectively face the back (185) and one of the flanks (186, 187) of the axial groove (182),
. a face contiguous (194) to the face (193) and substantially perpendicular to said face (193), the two faces (194) being substantially parallel to a diametral plane passing through the center of the back (185); the space between the two faces (194) providing sufficient clearance at rest and when torque is transmitted;
- for each row (40) of balls (3), two spring members in the form of axial spring member (166) are each disposed in an axial groove (195) formed in the corresponding race (190) and each spring member (166) bears on the back (185) in order to apply thrust to the corresponding race (190).

18. A coupling system according to claim 3, **characterized in that** the balls (3) are disposed in a plurality of axial rows (40) and held in place relative to each other by a cage (231):
- for each row (40) of balls (3), a concave part (202) is formed in the outer shaft (2) in the form of axial groove whose cross-section includes two concave faces (203, 204) which are inclined to each other and in bearing engagement with the balls (3);
- for each row (40) of balls (3), a concave part (201) is formed in the inner shaft (1) in the form of axial groove whose cross-section includes a back (205) and two flanks (206, 207) and the back (205) is substantially perpendicular to a diametral plane passing through its center;
- for each row (40) of balls (3), two races (210) are disposed in the concave part in the form of axial groove (201) of the inner shaft (1) and each race (210) is in the form of an axial bar whose cross-section includes:
. a concave face (211) in bearing engagement with the balls (3),
. two faces (213, 212) which are contiguous with each other and which respectively face the back (205) and one of the flanks (206, 207) of the axial groove (201),
. a bead (214) which is formed on the face (213) at the corner of the face (212);
- for each row (40) of balls (3), a spring member which comprises coil springs (221), said coil springs are disposed in the axial groove (201) between the beads (214) of the two races (210) and the base (222) of said coil springs (221) bears on the back (205) of the axial groove (201) to apply thrust to the two races (210).

19. A coupling system according to claim 3, **characterized in that** the balls (3) are disposed in a plurality of axial rows (40) and held in place relative to each other by a cage (231):
- for each row (40) of balls (3), a concave part (202) is formed in the outer shaft (2) in the form of axial groove whose cross-section includes two concave faces (203, 204) which are inclined to each other and in bearing engagement with the balls (3);
- for each row (40) of balls (3), a concave part (201) is formed in the inner shaft (1) in the form of axial groove whose cross-section includes a back (205) and two flanks (206, 207) and the back (205) is substantially perpendicular to a diametral plane passing through its center;
- for each row (40) of balls (3), two races (210) are disposed in the concave part in the form of axial groove (201) of the inner shaft (1) and each race (210) is in the form of an axial bar whose cross-section includes:
. a concave face (211) in bearing engagement with the balls (3),
. two faces (213, 212) which are contiguous with each other and which respectively face the back (205) and one of the flanks (206, 207) of the axial groove (201),
. a bead (214) which is formed on the face (213) at the corner of the face (212);
- for each row (40) of balls (3), a spring member in the form of an axial corrugated leaf spring (224), said axial corrugated leaf spring is disposed in the axial groove (201) between the beads (214) of the two races (210) and the axial corrugated leaf spring bears on the back (205) of the axial groove (201) to apply thrust to the two races (210).

20. A coupling system according to claim 19, **characterized in that** each axial corrugated leaf spring (224) has a axial end (227) which is curved outward and a axial end (228) which is curved inward, the external axial end (227) retaining a concerned axial end of the corresponding two races (210), and the internal axial end (228) bearing against the end (234) of the inner shaft (1) through a thrust washer (235) which is attached to the end (234) of the inner shaft (1) to retain the other axial end of the two races (210).

21. A coupling system according to claim 19, **characterized in that** each axial corrugated leaf spring (224) has its two axial ends (229) curved outward, one of the external axial ends (229) bearing against a ring (155) mounted in a groove (156) formed on the inner shaft (1) to retain a concerned axial end of the corresponding two races (210), and the other external axial ends (229) bearing against a thrust washer (235) which is attached to the end (234) of the inner shaft (1) to retain the other axial end of the two races (210).

22. A coupling system according to any one of claims 10 to 21, **characterized in that** the balls (3) are disposed in three axial rows (40) and the axial rows (40) are at 120° to each other in a transverse plane:
- the inner shaft (1) has three axial grooves (41, 81, 121, 171, 201), the axial grooves (41, 81, 121, 171, 201) are at 120° to each other in the transverse plane;
- the outer shaft (2) has three axial grooves (42, 82, 122, 172, 202), the axial grooves (42, 82, 122, 172, 202) are at 120° to each other in the transverse plane.

23. A coupling system according to any one of claims 10 to 21, **characterized in that**:
- the balls (3) are disposed in two diametrally opposed axial rows (40);
- the inner shaft (1) has two diametrally opposed axial grooves (41, 81, 121, 171, 201);
- the outer shaft (2) has two diametrally opposed axial grooves (42, 82, 122, 172, 202).

24. A coupling system according to any one of claims 10 and 12, **characterized in that**:
- the inner shaft (1) has three axial grooves (41, 81) which are at 120° to each other in a transverse plane and a spring member in the form of an axial coil spring (57, 97) and two races (50, 90) in the form of an axial bar are disposed in each axial groove (41, 81);
- the balls (3) are disposed in three axial rows which are at 120° to each other in a transverse plane and the balls are held in place relative to each other by a cage in the form of a sleeve;
- an assembly comprising the balls (3) sleeve (43), the races (50, 90) and the axial coil springs (57, 97) is closed at each axial end by a retaining ring (151, 152) which engages in each of the axial grooves (41, 81) of the inner shaft (1) and one of the retaining rings (151) bears against a ring (155) which is mounted in a groove (156) in said inner shaft (1);
- the outer shaft (2) has three axial grooves (42, 82) which are at 120° to each other in a transverse plane and which slide on the rows (40) of balls (3) and the axial grooves (42, 82) have a length enabling the required axial sliding of the outer shaft (2) and the inner shaft (1).

25. A coupling system according to any one of preceding claims, **characterized in that** it applied to the intermediate part (7) of an automobile vehicle steering column.

26. A coupling system according to any one of claims 1 to 24, **characterized in that** it applied to the top part of an automobile vehicle steering column.
